(19) Europäisches Patentamt
European Patent Office
Office européen des brevets

(11) **EP 1 853 893 B1**

(12) **FASCICULE DE BREVET EUROPEEN**

(45) Date de publication et mention
de la délivrance du brevet:
**13.07.2011 Bulletin 2011/28**

(51) Int Cl.:
***G01N 3/12*** *(2006.01)*

(21) Numéro de dépôt: **06725980.4**

(86) Numéro de dépôt international:
**PCT/FR2006/000410**

(22) Date de dépôt: **23.02.2006**

(87) Numéro de publication internationale:
**WO 2006/095070 (14.09.2006 Gazette 2006/37)**

(54) **INSTALLATION ET PROCEDE DE SOLLICITATION MECANIQUE D'ECHANTILLON AU MOYEN D'UN PACKER**

INSTALLATION UND VERFAHREN ZUM TESTEN EINES BELASTUNGSSYSTEMS EINER PROBE UNTER VERWENDUNG EINES PACKERS

INSTALLATION AND METHOD FOR TESTING SYSTEM OF LOADS OF A SAMPLE USING A PACKER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.03.2005 FR 0502207**

(43) Date de publication de la demande:
**14.11.2007 Bulletin 2007/46**

(73) Titulaire: **VALLOUREC MANNESMANN OIL & GAS FRANCE**
**59620 Aulnoye-Aymeries (FR)**

(72) Inventeurs:
• **DAVID, Didier**
**F-59530 Ruesnes (FR)**

• **NOEL, Thierry**
**F-59990 Sebourg (FR)**
• **ROUSSIE, Gabriel**
**F-59242 Cappelle en Pévèle (FR)**

(74) Mandataire: **Plaçais, Jean Yves**
**Cabinet Netter**
**36, avenue Hoche**
**75008 Paris (FR)**

(56) Documents cités:
**DE-A1- 3 827 080      FR-A- 2 564 973**
**FR-A- 2 618 901       US-A- 4 416 147**
**US-A- 6 161 425**

Printed by Jouve, 75001 PARIS (FR)

**Description**

L'invention concerne les tests de sollicitation mécanique d'échantillons tubulaires.

On entend ici par "échantillon tubulaire" tout tube ou ensemble de tubes raccordés entre eux, éventuellement par l'intermédiaire d'un manchon. Par conséquent, il pourra s'agir soit d'un unique tube, soit de deux tubes raccordés par tous moyens, par exemple par soudage, soit encore de deux tubes comportant respectivement des filetages mâle et femelle et raccordés par une connexion filetée constituée de ces filetages mâle et femelle vissés l'un dans l'autre, soit encore de deux tubes munis chacun d'un filetage mâle et raccordés l'un à l'autre par l'intermédiaire d'une connexion filetée constituée d'un manchon muni de deux filetages femelles.

Par ailleurs, on entend ici par "tube" tout composant tubulaire destiné à être utilisé dans un environnement d'exploitation difficile sur le plan de la pression et/ou des sollicitations mécaniques et/ou de la corrosion et/ou de la température, comme par exemple un puit de pétrole ou une raffinerie. Il pourra donc s'agir, par exemple, d'un tube de forage (ou "drill pipe"), ou d'un tube sans soudure, lisse ou fileté, pour le cuvelage (ou "casing") ou pour la production de pétrole ou de gaz (ou "tubing"), ou d'une canalisation, ou encore d'un pipeline.

Afin de représenter une tenue équivalente à différentes combinaisons de sollicitations statiques imposées à un échantillon tubulaire, l'homme de l'art utilise habituellement une ellipse dite de Von Mises dont les deux axes principaux sont respectivement représentatifs d'un chargement axial et de la pression subis par ledit échantillon, ledit chargement axial pouvant comprendre de la compression, de la traction ou de la flexion.

Afin de tester le comportement d'échantillons tubulaires en laboratoire sous des combinaisons de sollicitations, l'homme de l'art utilise une installation comportant un banc de sollicitation (appelé banc de fatigue lorsqu'il fournit des sollicitations dynamiques) et visualise la tenue auxdits combinaisons de sollicitations au moyen d'une ellipse de Von Mises.

Parmi les installations statiques de sollicitation connues, on peut notamment citer, d'une première part, celles qui consistent à introduire un fluide pressurisé à l'intérieur d'un échantillon tubulaire dont les extrémités ont été solidarisées à des obturateurs, d'une deuxième part, celles qui consistent à utiliser un vérin placé à l'intérieur ou à l'extérieur d'un échantillon tubulaire et d'une troisième part, celles qui consistent à combiner les deux types précédents. FR 2 618 901 décrit une installation du premier type.

Dans le type d'installation utilisant un fluide pressurisé interne, l'échantillon, tubulaire subit à la fois une traction et une pression. Cela résulte du fait que le fluide interne pressurisé induit non seulement une pression (essentiellement radiale) sur la paroi interne de l'échantillon tubulaire, mais également une pression (essentiellement axiale) sur les obturateurs d'extrémité qui induit une traction axiale sur l'échantillon tubulaire. L'intensité de la traction étant proportionnelle à la pression, lorsque l'on fait varier la pression, on fait donc varier dans les mêmes proportions la traction. Ce type d'installation interdit donc l'étude de l'influence de la pression indépendamment de l'influence de la traction. Ce type d'installation ne permet donc pas d'explorer n'importe quelle combinaison de pression et de traction axiale, mais seulement une combinaison modélisable par un segment du grand axe de l'ellipse de Von Mises.

Dans le type d'installation utilisant un vérin interne ou externe, l'échantillon tubulaire ne subit qu'une traction axiale pure. Ce type d'installation interdit donc l'étude de l'influence de la pression pure, tout comme l'étude de n'importe quelle combinaison de pression et de traction axiale, mais seulement une combinaisons modélisable par un segment de l'axe des abscisses (X) du plan de représentation de l'ellipse de Von Mises.

Une installation utilisant à la fois un vérin et un fluide pressurisé interne permet de décrire une partie au moins du plan de représentation de l'ellipse de Von Mises mais au prix d'une installation complexe.

Par ailleurs, les installations présentées ci-avant ne permettent de solliciter les échantillons que de façon statique. Or, ce type de sollicitation ne permet pas de reproduire certaines conditions d'exploitation difficiles imposant en plus des sollicitations dynamiques, comme par exemple celles qui sont rencontrées par les structures composées de tubes et de connexions qui relient une plate-forme "offshore" à une tête de puit de forage pouvant être située à quelques kilomètres de distance, ou celles rencontrées par des structures similaires dans des puits déviés nécessitant une mise en rotation de la colonne. De telles structures sont notamment soumises à des sollicitations cycliques de flexion, éventuellement superposées à des sollicitations statiques de pression intérieure et/ou de traction axiale. On utilise alors une installation, également appelée banc de fatigue, pour tester les échantillons en sollicitations dynamiques.

L'invention a donc pour but de proposer une alternative aux installations statiques qui utilisent à la fois un vérin et un fluide pressurisé, et optionnellement de tester les échantillons de manière dynamique.

Elle propose à cet effet une installation de sollicitation mécanique d'un échantillon tubulaire, comprenant au moins un packer (ou « bourroir » ou encore « chaussette ») logé dans l'échantillon au niveau d'une zone à tester, présentant une extension longitudinale supérieure à celle de la zone là tester et comportant, d'une première part, des premiers moyens de pression chargés de faire varier localement le diamètre d'au moins une première partie du packer afin de l'appliquer contre une surface interne de l'échantillon au niveau de la zone à tester, d'une deuxième part, des deuxièmes moyens de pression chargés d'exercer une première pression interne choisie sur une partie de la surface interne de l'échantillon, située au niveau d'une deuxième partie du packer, et/ou d'une troisième part, des troisièmes moyens de pression chargés de coopérer avec au moins un organe d'obturation, solidarisé à l'échantillon à distance d'une extrémité du packer pour définir une zone d'action dans laquelle l'échantillon subit une seconde pression interne choisie, indépendante de la première pression.

L'installation selon l'invention peut comporter des caractéristiques complémentaires qui peuvent être prises séparément ou en combinaison, et notamment :

- au moins une jauge de contrainte placée en un endroit choisi de la surface externe de l'échantillon et délivrant des premières mesures de contraintes représentatives de l'état de contrainte subie par l'échantillon au niveau de l'endroit choisi ;
- au moins deux jauges de contrainte placées en deux endroits différents choisis de la surface externe et délivrant des premières mesures de contraintes représentatives de l'état de contrainte subie par l'échantillon au niveau des deux endroits choisis ;
- la déformation par flexion désirée correspond par exemple à des premières mesures de référence, initiales ;
- deux moyens de support destinés à supporter l'échantillon, un moteur rotatif couplé à un moyen d'excitation, équipé d'un dispositif à masse excentrée couplé à une extrémité de l'échantillon et définissant un balourd, et des moyens de contrôle chargés d'ordonner l'entraînement en rotation de la masse excentrée par le moteur, selon une vitesse ajustable, afin de soumettre l'échantillon à une excitation vibratoire choisie, fonction du balourd, pour le déformer cycliquement par flexion ;
- au moins l'un des moyens de support peut être agencé pour que sa position (ou leurs positions respectives) corresponde(nt) sensiblement à un (ou des), noeud(s) de vibration de l'échantillon ;
- les moyens de contrôle peuvent alors être chargés d'adapter la vitesse de rotation du moteur en fonction de l'amplitude d'une contrainte représentative de la contrainte de flexion que l'on veut faire subir à l'échantillon ;
- au moins un couple d'accéléromètres placés à 90° l'un de l'autre en des endroits choisis de la surface externe de l'échantillon et délivrant des secondes mesurés représentatives d'un déplacement subi par cet échantillon. Dans ce cas, les moyens de contrôle sont chargés d'adapter la vitesse de rotation du moteur en fonction des dernières secondes mesures délivrées par le couple d'accéléromètres, afin que l'amplitude du déplacement radial par flexion subi par l'échantillon à un endroit choisi demeure sensiblement constante;
- au moins deux autres couples d'accéléromètres. Dans ce cas, les accéléromètres de chaque autre couple sont placés à 90° l'un de l'autre en d'autres endroits choisis de la surface externe de l'échantillon et délivrent d'autres secondes mesures prises au niveau des autres endroits choisis et représentatives de déplacements subis par l'échantillon aux autres endroits choisis. Les moyens de contrôle peuvent alors être chargés d'effectuer des combinaisons des dernières secondes mesures afin d'adapter la vitesse de rotation du moteur en fonction de ces combinaisons, de sorte que l'amplitude de déplacement par flexion subie par l'échantillon aux endroits choisis demeure sensiblement constante ;
- lorsque l'échantillon tubulaire est constitué d'au moins deux composants tubulaires raccordés entre eux au niveau de la zone à tester, deux couples d'accéléromètres sont préférentiellement placés de part et d'autre du raccordement ;
- les moyens de contrôle peuvent être chargés de comparer au moins les dernières secondes mesures délivrées par l'un au moins des couples d'accéléromètres à des secondes mesures de référence représentatives d'une amplitude de déplacement initiale correspondant à une amplitude de déplacement par flexion désirée à l'endroit choisi, puis d'adapter la vitesse de rotation du moteur en fonction du résultat de la comparaison ;
- les moyens de contrôle peuvent être chargés de déterminer un écart relatif entre l'amplitude de déplacement (représentée par les dernières secondes mesures) et l'amplitude du déplacement par flexion désirée, puis de comparer cet écart aux bornes d'un intervalle de tolérance dit de régulation, de manière à adapter la vitesse de rotation du moteur lorsque l'écart est en dehors dudit intervalle de régulation;
- un dispositif de détection de rotation (ou de tour ou de cycle) chargé de détecter chaque rotation (ou tour ou cycle) imposée par le moteur ;
- ce dispositif de détection de rotation est par exemple chargé d'adresser aux moyens de contrôle un signal représentatif de chaque rotation détectée, afin qu'ils, adaptent la vitesse de rotation du moteur chaque fois que le nombre de signaux reçus est égal à un nombre choisi ;
- les moyens de contrôle peuvent être chargés d'ordonner au moteur, au cours d'un test de sollicitation, d'entraîner la masse excentrée en rotation selon une séquence choisie de vitesses de rotation afin de soumettre l'échantillon à une séquence choisie d'excitations vibratoires ;
- le packer peut comprendre un support sensiblement non déformable sur lequel est montée une membrane annulaire déformable. Dans ce cas, les premiers moyens de pression comprennent un premier circuit d'alimentation en fluide chargé d'introduire un fluide choisi (par exemple un liquide pressurisé) entre le support sensiblement non déformable et la membrane de manière à instaurer une pression choisie;
- les deuxièmes moyens de pression peuvent comprendre un deuxième circuit d'alimentation en fluide (par exemple un gaz) comportant une sortie de fluide débouchant en regard de la surface interne de l'échantillon de manière à instaurer la première pression interne choisie ;
- ce deuxième circuit d'alimentation en fluide peut par exemple traverser de façon étanche la membrane ;
- des moyens de détection de fuite, placés à proximité de la surface externe de l'échantillon dans la zone à tester et chargés de détecter une éventuelle fuite du fluide (délivré par le deuxième circuit d'alimentation) en périphérie de l'échantillon ;
- les troisièmes moyens de pression peuvent comprendre un troisième circuit d'alimentation en fluide propre à alimenter chaque zone d'action en fluide (par exemple un liquide pressurisé) afin d'exercer sur échantillon la seconde pression interne choisie ;
- un dispositif d'aiguillage raccordé aux premier et troisième circuits d'alimentation en fluide, et une pompe couplée au dispositif d'aiguillage ;
- le support du packer (ou chaussette) est par exemple un tube formant un conduit central creux qui définit une partie du troisième circuit d'alimentation en fluide et
- qui comprend deux extrémités opposées dont l'une au moins débouche dans une zone d'action de manière à l'alimenter en fluide;
- deux organes d'obturation, installés à distance des deux extrémités du packer pour définir au moins une zone d'action dans laquelle l'échantillon subit la seconde pression interne choisie ;
- une partie du premier circuit d'alimentation en fluide et/ou une partie du deuxième circuit d'alimentation en fluide peuvent être logées à l'intérieur du conduit central ;
- au moins un capteur de température installé en un endroit choisi de l'échantillon et délivrant des troisièmes mesures représentatives de la température de l'échantillon en cet endroit choisi ;
- au moins un capteur de pression destiné à être installé en un endroit choisi de l'échantillon et délivrant des quatrièmes mesures représentatives de la pression interne de l'échantillon en cet endroit choisi ;
- les moyens de contrôle peuvent être chargés de comparer des premiers résultats issus de certaines au moins des premières mesures à des seconds résultats issus de certaines au moins des secondes mesures, de manière à autoriser la poursuite du test lorsque les premiers résultats sont compatibles avec les seconds résultats.

L'invention concerne également un procédé de sollicitation mécanique d'un échantillon tubulaire, consistant à introduire dans l'échantillon, au niveau d'une zone à tester, au moins un packer présentant une extension longitudinale supérieure à celle de la zone à tester et comportant des premiers et deuxièmes et/ou troisièmes moyens de pression, puis à faire varier localement le diamètre d'au moins une première partie du packer avec les premiers moyens de pression de manière à appliquer ce packer contre une surface interne de l'échantillon, au niveau de la zone à tester, et à exercer avec les deuxièmes moyens de pression une première pression interne choisie sur une partie de la surface interne située au niveau d'une deuxième partie du packer, et/ou à solidariser à l'échantillon au moins un organe d'obturation, à distance d'une extrémité du Packer, pour défini une zone d'action, puis à exercer sur l'échantillon, avec les troisièmes moyens de pression, une seconde pression interne choisie au niveau de la zone d'action.
Le procédé selon l'invention peut comporter des caractéristiques complémentaires qui peuvent être prises séparément ou en combinaison, et notamment :

- on peut utiliser au moins une jauge de contrainte, placée en un endroit choisi de la surface externe de l'échantillon, pour obtenir des premières mesures de contraintes représentatives de l'état de contrainte subi par l'échantillon au niveau de l'endroit choisi ;
- on peut utiliser au moins deux jauges de contrainte, placées en deux endroits différents choisis de la surface externe, pour obtenir des premières mesures de contraintes représentatives de l'état de contrainte subi par l'échantillon au niveau des deux endroits choisis ;
- on peut utiliser deux moyens de support sur lesquels sont installés l'échantillon, et un moteur rotatif couplé à un moyen d'excitation, équipé d'un dispositif à masse excentrée couplé à une extrémité de l'échantillon et définissant un balourd, et on peut entraîner la masse excentrée en rotation, au moyen du moteur, selon une vitesse ajustable, de manière à soumettre l'échantillon à une excitation vibratoire choisie, fonction du balourd, pour le déformer cycliquement par flexion;
- on peut placer au moins l'un des moyens de support sensiblement au niveau d'un noeud de vibration de l'échantillon;
- on peut prévoir une étape préliminaire de référence dans laquelle on choisit tout d'abord la vitesse de rotation initiale du moteur en fonction de l'amplitude d'une contrainte que l'on veut faire subir à l'échantillon ;
- après l'étape préliminaire de référence, on peut adapter la vitesse de rotation du moteur afin que l'amplitude de la contrainte de flexion subie par l'échantillon et représentée par des premières mesures demeure sensiblement constante ;
- on peut utiliser au moins un couple d'accéléromètres placés à 90° l'un de l'autre en des endroits choisis de la surface externe de l'échantillon pour obtenir des secondes mesures représentatives du déplacement subi par cet échantillon. Dans ce cas, on adapte la vitesse de rotation du moteur en fonction des dernières secondes mesures délivrées par le couple d'accéléromètres, pour que l'amplitude du déplacement radial par flexion subi par l'échantillon à l'endroit choisi demeure sensiblement constante ;

- on peut également utiliser au moins deux autres couples d'accéléromètres. Dans ce cas, les accéléromètres de chaque autre couple sont également placées à 90°, l'un de l'autre en d'autres endroits choisis de la surface externe de l'échantillon et délivrent d'autres secondes mesures représentatives de déplacements subis par l'échantillon au niveau des autres endroits choisis. On peut alors effectuer des combinaisons des dernières secondes mesures afin d'adapter la vitesse de rotation du moteur en fonction de ces combinaisons, pour que l'amplitude du déplacements par flexion subie par l'échantillon aux endroits choisis, demeure sensiblement constante ;
- on peut comparer au moins les dernières secondes mesures délivrées par au moins un couple d'accéléromètres à des secondes mesures de référence représentatives d'une amplitude de déplacement initial correspondant à une amplitude de déplacement par flexion désirée à l'endroit choisi, puis adapter la vitesse de rotation du moteur en fonction du résultat de la comparaison ;
- on peut déterminer un écart relatif entre l'amplitude de déplacement, représentée par les dernières secondes mesures, et l'amplitude du déplacement par flexion désirée, puis comparer cet écart aux bornes d'un intervalle de tolérance dit de régulation, de manière à adapter la vitesse de rotation du moteur lorsque cet écart est en dehors dudit intervalle de régulation ;
- on peut détecter chaque rotation imposée par le moteur, par exemple pour adapter la vitesse de rotation du moteur chaque fois que le nombre de signaux reçus est égal à un nombre choisi ;
- au cours d'un test de sollicitation on peut ordonner au moteur d'entraîner la masse excentrée en rotation selon une séquence choisie de vitesses de rotation afin de soumettre l'échantillon à une séquence choisie d'excitations vibratoires ;
- on peut effectuer une détection de fuite à la périphérie de l'échantillon, dans la zone à tester;
- on peut solidariser à l'échantillon deux organes d'obturation, à distance des deux extrémités du packer, pour définir deux zones d'action dans lesquelles on fait subir à l'échantillon la seconde pression interne choisie ;
- on peut utiliser au moins un capteur de température en un endroit choisi de l'échantillon pour obtenir des troisièmes mesures représentatives de la température de l'échantillon en cet endroit choisi ;
- on peut utiliser au moins un capteur de pression en un endroit choisi de l'échantillon pour obtenir des quatrièmes mesures représentatives de la pression interne de l'échantillon en cet endroit choisit ;
- on peut comparer des premiers résultats de contrainte issus de certaines au moins des premières mesures à des seconds résultats de déplacement radial issus de certaines au moins des secondes mesures de manière à autoriser la poursuite du test lorsque les premiers résultats sont compatibles avec les seconds résultats. D'autres caractéristiques et avantages de l'invention apparaîtront à l'examen de la description détaillée ci-après, et des dessins annexés, sur lesquels :
- la figure 1 illustre de façon schématique, un exemple de réalisation d'une installation de sollicitation mécanique de type dynamique, selon l'invention,
- la figure 2 illustre de façon schématique un exemple de réalisation d'un packer pour une installation de sollicitation selon l'invention,
- la figure 3 illustre de façon schématique une variante de packer pour une installation de sollicitation selon l'invention,
- la figure 4 illustre un exemple de jauge de contrainte adapté à la détection de contraintes multi-axiales,
- la figure 5 illustre de façon schématique un exemple de positionnement de jauges de contrainte sur un échantillon,
- la figure 6 illustre de façon schématique, dans une vue en coupe transversale, un exemple de dispositif d'excitation entre un arbre de moteur et un échantillon tubulaire,
- la figure 7 illustre de façon schématique le déplacement de l' échantillon dans le cas d'une sollicitation mécanique de type dynamique, et
- la figure 8 est un diagramme illustrant une partie, du calcul de déplacement dynamique au moyen d'une ellipse.

Les dessins annexés pourront non seulement servir à compléter l'invention, mais aussi contribuer à sa définition, le cas échéant.

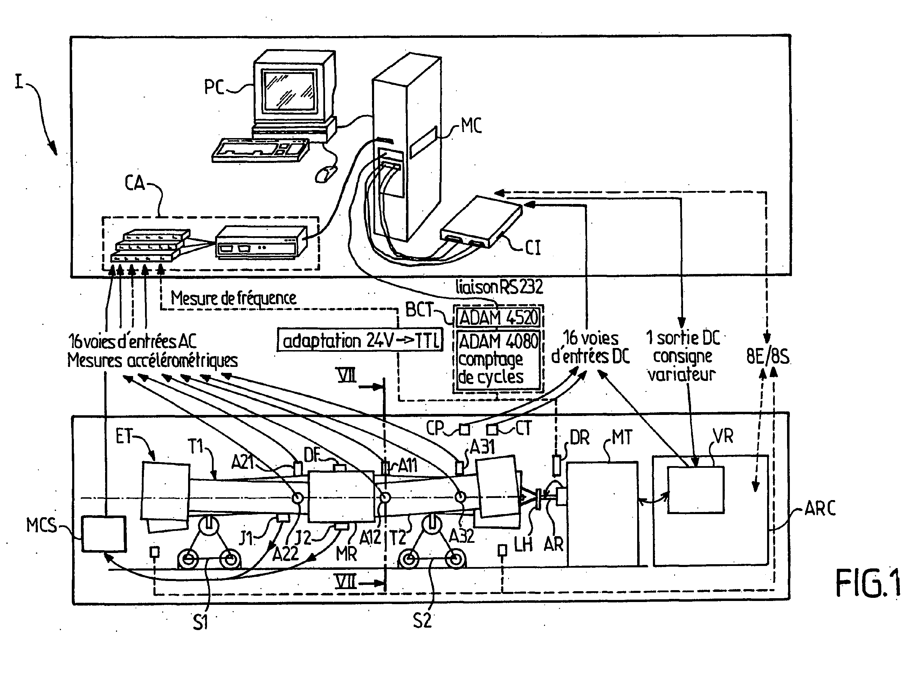

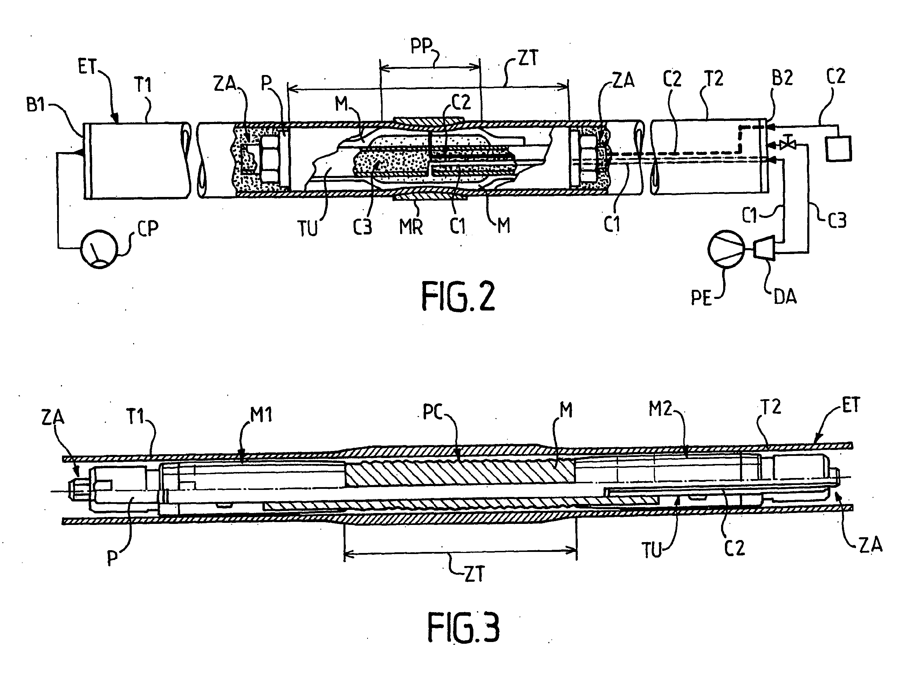

On se réfère tout d'abord aux figures 1 et 2 pour décrire un exemple de réalisation d'une installation 1 dédiée à la sollicitation mécanique d'un échantillon tubulaire ET.

Comme indiqué dans la partie d'introduction, on entend ici par "échantillon tubulaire" tout tube ou ensemble de tubes raccordés entre eux, éventuellement par l'intermédiaire d'un manchon de raccordement. Par conséquent, l'invention est adaptée à la sollicitation mécanique d'échantillons tubulaires se présentant sous les formes suivantes:

- un tube unique (ou composant tubulaire),
- deux tubes (ou composants tubulaires) raccordés par tous moyens, par exemple, par soudage,
- un premier tube (ou composant tubulaire) muni d'un filetage mâle et un second
- tube (ou composant tubulaire) muni d'un filetage femelle destiné à coopérer avec le filetage mâle pour constituer une connexion filetée, et

- un premier tube (ou composant tubulaire) muni d'un filetage mâle, un second tube (ou composant tubulaire) muni également d'un filetage mâle, et un manchon de raccordement (ou composant tubulaire) muni de deux filetages femelles destinés à coopérer respectivement avec les filetages mâles pour constituer une connexion filetée.

Dans l'exemple illustré sur la figure 1, l'installation I est plus particulièrement adaptée aux sollicitations mécaniques de type dynamique. Mais, l'invention n'est pas limitée à ce cas. Elle concerne en effet aussi bien les sollicitations mécaniques de type dynamique que celles de type statique.

On entend ici par "sollicitation mécanique de type statique" une sollicitation sensiblement constante sur un intervalle de temps et résultant notamment de l'application d'une pression et/ou d'une traction à un échantillon tubulaire, tandis que l'on entend par "sollicitation mécanique de type dynamique" tous les autres types de sollicitation variable dans le temps, comme par exemple celle résultant de l'application à un échantillon tubulaire non seulement d'une pression et/ou d'une traction, mais également d'une excitation vibratoire choisie destinée à le déformer par flexion cycliques.

Par ailleurs, on entend ici par « amplitude d'une sollicitation cyclique » la moitié d'une distance crête à crête.

Comme cela est illustré sur la figure 1, une installation I, selon l'invention, comporte tout d'abord une première partie (ou banc) destinée à solliciter mécaniquement un échantillon ET. Cette première partie comporte (au moins) un packer P (illustré sur la figure 2), également appelé bourroir ou chaussette, logé à intérieur de l'échantillon ET au niveau d'une zone à tester ZT.

Dans l'exemple non limitatif illustré sur la figure 1, l'échantillon tubulaire ET (ci-après appelé échantillon) est constitué de premier T1 et second T2 tubes munis chacun d'un filetage mâle (non représenté), et d'un manchon de raccordement MR muni de deux filetages femelles coopérant respectivement avec les filetages mâles pour constituer une connexion filetée que l'on souhaite tester. C'est la raison pour laquelle la zone à tester ZT se trouve située au niveau du manchon de raccordement MR Bien entendu, toute autre zone de l'échantillon ET peut faire l'objet d'un test.

Le packer P, selon l'invention, doit présenter une extension longitudinale (suivant l'axe longitudinal du tube) supérieure à celle de la zone à tester ZT, et comporte des premiers et deuxièmes et/ou troisièmes moyens de pression.

Les premiers moyens de pression sont chargés de faire varier localement le diamètre d'au moins une première partie PP du packer P afin de l'appliquer contre la surface interne de l'échantillon ET au niveau de la zone à tester ZT.

Par exemple, et comme illustré sur la figure 2, la variation locale du diamètre du packer P peut se faire au moyen d'une membrane annulaire déformable M, montée de façon étanche sur la surface externe d'un tube TU du packer P, et d'un fluide choisi délivré sous une pression choisie, entre la surface externe du tube et la membrane M, par un premier circuit d'alimentation C1 faisant partie des premiers moyes de pression.

La membrane M est ici située dans une région centrale du packer P.

Dans une variante illustrée sur la figure 3, le packer P peut comporter une membrane M déformable comportant une partie centrale PC, éventuellement munie de bossages ou villosités permettant une bonne répartition du fluide et l'application de la pression intérieure, et prolongée de chaque côté par deux parties M1 et M2 de préférence lisses.

Le fluide sous pression qui est injecté par le premier circuit d'alimentation C1 permet de plaquer une partie au moins de la membrane M (au moins M1 et M2) contre la paroi interne de l'échantillon ET et donc d'immobiliser le Packer P à l'intérieur dudit échantillon ET, au niveau de la zone à tester ZT, tout en isolant une partie au moins de cette zone à tester ZT (notamment au niveau de la partie centrale de la membrane):

Ce fluide est de préférence un liquide pressurisé, comme par exemple de l'eau. Sa pression maximale dépend du diamètre de l'échantillon ET. Par exemple, une pression maximale de 600 bars peut être envisagée pour des diamètres supérieurs à 7", cette valeur dépend bien évidemment du type de pompe utilisé.

Les deuxièmes moyens de pression sont chargés d'exercer une première pression interne PI1 choisie sur une partie de la surface interne de l'échantillon ET, située en regard d'une deuxième partie du packer P. Dans l'exemple illustré sur la figure 2 la deuxième partie du packer P est située au niveau de la membrane M. Elle constitue une sous-partie de la première partie PP sur laquelle s'étend la membrane M. En revanche, dans l'exemple illustré sur la figure 3 la deuxième partie du packer P est la partie centrale PC située entre les deux parties d'extrémité M1 et M2 de la membranes M.

Par exemple, et comme illustré sur la figure 2, les deuxièmes moyens de pression comprennent un deuxième circuit d'alimentation en fluide C2 muni d'une sortie qui débouche en regard de la surface interne de l'échantillon ET. Le deuxième circuit d'alimentation C2 alimente en fluide, sous une pression choisie, la zone de l'échantillon ET qui se trouve située au niveau de la deuxième partie du packer P, permettant ainsi d'y instaurer la première pression interne PI1 et donc de mettre localement l'échantillon ET (et ici plus précisément sa connexion filetée) sous une pression essentiellement radiale similaire à celle rencontrée lors de conditions d'exploitation difficiles

Le fluide circulant dans le deuxième circuit d'alimentation C2 est de préférence un gaz pressurisé, comme par exemple l'hélium. Sa pression maximale dépend du diamètre de l'échantillon ET. Par exemple, une pression maximale de 600 bars peut être envisagée pour des diamètres supérieurs à 7", cette valeur dépend bien évidemment du type de pompe utilisé.

Les troisièmes moyens de pression coopèrent avec au moins un organe d'obturation B1, qui est installé à une distance choisie d'une extrémité du packer P afin de définir dans l'échantillon ET une zone d'action ZA dans laquelle l'échantillon ET subit une seconde pression interne PI2 choisie. On peut ainsi induire une traction dans la zone d'action ZA de l'échantillon ET.

Par exemple, l'organe d'obturation B1 est solidarisé à l'une des deux extrémités de l'échantillon ET. Lorsque cette extrémité est munie d'un filetage, la solidarisation peut se faire par vissage.

Lorsque l'on veut induire un chargement de traction axiale sur toute la longueur de l'échantillon ET; on prévoit deux organes d'obturation B1 et B2. Par exemple, chaque organe d'obturation B1, B2 est solidarisé à l'une des deux extrémités de l'échantillon ET. La zone d'action ZA s'étend alors entre les deux organes d'obturation B1 et B2. Lorsque les deux extrémités de l'échantillon ET sont munies d'un filetage, la solidarisation des organes d'obturation B1 et B2 peut se faire par vissage. En variante elle peut se faire par tout autre moyen, et par exemple par une soudure continue entre extrémité d'échantillon et organe d'obturation.

La valeur T de la charge de traction axiale est par exemple donnée par la formule :

$$T = \pi.(PI2).\frac{\left(ID_t^2 - ID_P^2\right)}{4}$$

où $ID_t$ est le diamètre intérieur de l'échantillon ET et donc des tubes T1, T2, IDp est le diamètre intérieur du tube TU du packer P, et {PI2} est la seconde pression interne.

On peut en variante envisager de créer dans l'échantillon ET deux zones d'action indépendantes, de part et d'autre du packer P, afin d'exercer une traction axiale sur chacune des deux parties d'échantillon auxquelles elles correspondent.

Par exemple, et comme illustré sur la figure 2, les troisièmes moyens de pression comprennent un troisième circuit d'alimentation en fluide C3 chargé d'alimenter en fluide pressurisé chaque zone d'action ZA.

Afin d'alimenter chaque zone d'action ZA on peut par exemple se servir du tube TU du packer P. Plus précisément, lorsque le tube TU est évidé, il peut servir à canaliser le fluide délivré par le troisième circuit C3 et constituer une partie de ce dernier. Par exemple, et comme illustré sur la figure 2, le troisième circuit C3 comprend une sortie raccordée à un orifice traversant formé dans la paroi du tube TU, permettant ainsi d'alimenter ce dernier en fluide pressurisé.

Le fluide circulant dans le troisième circuit d'alimentation C3 est de préférence un liquide pressurisé, comme par exemple de l'eau. Par exemple, une pression maximale de 600 bars peut être envisagée quel que soit le diamètre de l'échantillon ET.

Pour optimiser l'isolement de la zone à tester ZT et de la zones d'action ZA, la pression du fluide circulant dans les premiers moyens de pression et destiné à gonfler la membrane M du packer P est choisie supérieure aux première et seconde pressions intérieures PI1, PI2.

Lorsqu'un même fluide circule dans les premier C1 et troisième C3 circuits d'alimentation en fluide, ces derniers peuvent être par exemple raccordés à un dispositif d'aiguillage DA par ailleurs raccordé à une pompe haute pression PE. Grâce à un tel dispositif d'aiguillage DA, on peut par exemple commencer par instaurer la pression choisie dans chaque zone située entre le tube TU et la membrane M (ou sa partie centrale PC), afin d'immobiliser le packer P à l'intérieur de l'échantillon ET, et si l'on veut exercer une traction sur l'échantillon ET on ferme le premier circuit C1 et l'on ouvre le troisième circuit C3 afin d'instaurer la seconde pression interne PI2 dans chaque zone d'action ZA.

Bien entendu, chaque circuit d'alimentation C1 à C3 peut disposer de sa propre pompe haute pression.

En présence d'un tube TU creux (ou évidé), il est avantageux qu'une partie au moins des premier C1 et deuxième C2 circuits soit logée à l'intérieur du tube TU. Dans ce cas, chaque sortie du premier circuit C1 est raccordée à au moins un orifice traversant formé dans la paroi du tube TU au niveau de la membrane M correspondante. Dans le premier exemple de réalisation de packer P (illustré sur la figure 2) le deuxième circuit C2 traverse la paroi du tube TU au niveau d'un orifice et est raccordé de façon étanche à un autre orifice traversant formé dans la membrane M. Dans le second exemple de réalisation de packer P (illustré sur la figure 3) le deuxième circuit C2 est raccordé de façon étanche à un orifice traversant formé dans la paroi du tube TU au niveau de la partie centrale PC.

Afin de fixer les contraintes imposées à l'échantillon ET, mais également de déterminer les réformations et/ou déplacements dont il fait l'objet du fait des contraintes imposées, on place sur la surface externe de l'échantillon ET au moins une jauge de contraintes Jk (l'indice k représente ici le nombre de jauges utilisées) et/ou au moins un couple d'accéléromètres Ail et Ai2 (l'indice i représente ici le nombre de couples utilisés).

Chaque jauge de contrainte Jk est placée (par exemple par collage) en un endroit choisi de la surface externe de l'échantillon ET afin de délivrer des premières mesures de contraintes qui sont représentatives de l'état de contrainte subi localement par cet échantillon (au niveau de l'endroit choisi).

De préférence on utilise au moins deux jauges de contraintes. Ce nombre n'est pas limité. Plus il est élevé, plus il permet de connaître avec précision la cartographie des contraintes subies par l'échantillon ET et donc la cartographie des déformations dont il fait localement l'objet.

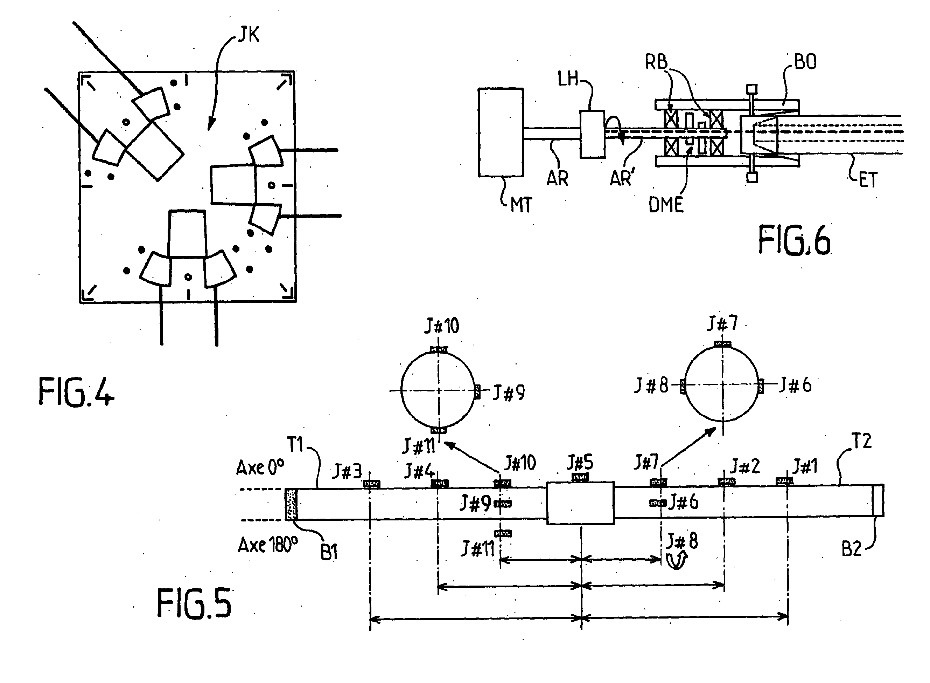

Les jauges de contrainte Jk peuvent être de tout type. Il peut notamment s'agir, de jauges de contrainte uni-axiales et/ou de jauges de contrainte multi-axiales, par exemple agencées sous la forme de rosettes tri-directionnelles, comme illustré sur la figure 4.

Grâce à ces jauges de contrainte Jk on peut connaître, notamment initialement (étape préliminaire de référence), l'état de contrainte (uni- ou multi-axial) subi par l'échantillon ET en un ou plusieurs endroits (ou sections) et donc l'effet d'une sollicitation exercée sur celui-ci.

Un schéma représentant un exemple de positionnement de jauges de contraintes Jk sur un échantillon ET, comportant deux tubes T1 et T2 de diamètre extérieur voisin de 240 mm et de longueur 2300 mm assemblés par filetages à l'aide d'un manchon fileté MR de longueur sensiblement égale à 400 mm, est illustré sur la figure 5. Dans cet exemple, 11 jauges de contraintes J1 à J11 sont utilisées:

- une jauge J5 est placée sensiblement dans le plan médian de l'échantillon ET, c'est-à-dire dans le plan médian du manchon MR, suivant l'axe 0°,
- une jauge J1 ou J3 est placée au voisinage de chaque extrémité de l'échantillon ET (ici sur les tubes T1, T2 à une distance du plan médian égale à environ 1300 mm), suivant l'axe 0°,
- des jauges J2 et J4 sont placées respectivement dans des première et deuxième sections intermédiaires de l'échantillon ET (ici sur les tubes T1, T2 à une-distance du plan médian sensiblement égale à 900 mm), suivant l'axe 0°,
- des triplets de jauges (J6 à J8) et (J9 à J11) sont respectivement placés dans des troisièmes et quatrièmes sections intermédiaires de l'échantillon ET (ici sur les tubes T1, T2 à une distance du manchon sensiblement égale à une fois le diamètre extérieur des tubes. T1, T2, soit à une distance du plan médian sensiblement égale à environ 530 mm). Les jauges de chaque triplet sont ici positionnées à 90° les unes des autres selon deux configurations différentes, à titre d'exemple. On peut aussi utiliser des couples ou des quadruplets de jauges.

Bien entendu, un nombre plus limité de jauges de contrainte Jk peut être utilisé. Par exemple, et comme illustré sur la figure 1, on peut n'utiliser que deux jauges de contraintes, la première étant placée au centre de l'échantillon ET et la seconde étant placée à une certaine distance de la première. D'une manière générale, les positions des jauges de contrainte Jk dépendent de l'endroit où est implanté le packer P dans l'échantillon ET.

Les deux accéléromètres Ail et Ai2 de chaque couple sont placés (par exemple par collage) à 90° l'un de l'autre en des endroits choisis de la surface externe de l'échantillon ET, afin de délivrer des secondes mesures (ou signaux) représentatives, après une double intégration, du déplacement dynamique subi localement par cet échantillon.

Par exemple, on utilise un premier couple A11 est A12 que l'on associe à deux autres couples d'accéléromètres A21 et A22 d'une part, A31 et A32 d'autre part.

Les deux accéléromètres Ai'1 et Ai'2 de chaque autre couple '(i' = 2 ou 3 dans l'exemple considéré) sont placés (par exemple par collage) à 90° l'un de l'autre en des endroits choisis de la surface externe de l'échantillon ET, différents des endroits où sont implantés les deux accéléromètres A11 et A12 du premier couple. Ils sont destinés à délivrer d'autres secondes mesures (ou signaux) représentatives, après une double intégration, du déplacement dynamique subi localement par l'échantillon ET au niveau de l'endroit où ils sont implantés.

Dans l'exemple considéré les couples d'accéléromètres A11-A12 et A21-A22 sont placés respectivement sur les tubes T2, T1 près du manchon de raccordement et de part et d'autre de celui-ci alors que le couple A31-A32 est disposé sur le tube T2 au voisinage de l'extrémité de l'échantillon ET.

L'ensemble des jauges de contraintes (1l à J11) et des couples d'accéléromètres (A11 à A32) permet de déterminer les contraintes et les déplacements radiaux dynamiques en tout point de l'échantillon ET.

On reviendra plus loin, sur l'utilité des couples d'accéléromètres.

L'installation 1 peut comporter d'autres capteurs que les jauges de contraintes Jk et les couples d'accéléromètres (Ai1-Ai2).

Ainsi, comme illustré sur la figure 1, on peut prévoir au moins un capteur de pression CP et/ou au moins un capteur de température CT et/ou au moins un détecteur de fuite DF.

Le capteur de température CT est installé en un endroit choisi de l'échantillon ET, par exemple au niveau de la zone à tester ZT. Il est chargé de délivrer des signaux (ou troisièmes mesures) représentatifs de la température de l'échantillon ET au niveau de l'endroit choisi où il est installé. Un tel capteur CT permet notamment de faire une auto-compensation des mesures délivrées par les jauges de contrainte, afin de pallier les variations de température locales.

Le capteur de pression CP est installé en un endroit choisi de l'échantillon ET, par exemple au niveau de la zone à tester ZT ou, comme illustré sur la figure 2, au niveau d'un organe d'obturation B1. Il est chargé de délivrer des signaux (ou quatrièmes mesures) représentatifs de la pression interne (PI1 ou PI2) subie par l'échantillon ET au niveau de l'endroit choisi où il est installé. Un tel capteur CP peut notamment permettre de détecter une variation soudaine de la pression interne induite par une fissure.

Le détecteur de fuite DF est installé en un endroit choisi de l'échantillon ET, par exemple au niveau de la zone à tester ZT, et plus précisément au niveau de la deuxième partie du packer P. Il est chargé de détecter toute présence du fluide (gaz), délivré par le deuxième circuit C2, à l'extérieur de l'échantillon ET. En cas de détection d'une fuite, le détecteur de fuite DF génère un signal d'alarme à destination du module de contrôle MC. Un tel détecteur DF peut notamment permettre de détecter une fissure dans l'échantillon ET.

Grâce aux moyens de sollicitation précités (premiers et deuxièmes et/ou troisièmes moyens de pression) il est possible de solliciter l'échantillon ET de façon statique.

On peut ainsi soumettre l'échantillon ET à une pression pure en utilisant les premier moyens de pression (premier circuit C1) pour plaquer la membrane M contre la surface interne dudit échantillon ET, et les deuxièmes moyens de pression (deuxième circuit C2) pour appliquer localement une première pression interne (radiale) PI1 sur la paroi interne de l'échantillon ET.

Il est rappelé qu'un échantillon ET peut dans certaines conditions subir des pressions internes pouvant atteindre 600 bars.

On peut également soumettre l'échantillon ET à une traction pure en utilisant les premier moyens de pression (premier circuit C1) pour plaquer la membrane M contre la surface interne dudit échantillon ET, et les troisièmes moyens de pression (troisième circuit C3) pour appliquer dans chaque zone d'action ZA une seconde pression interne (axiale) PI2 entre les organes d'obturation B1 et B2, via le tube TU du packer P.

On peut enfin soumettre l'échantillon ET à une pression combinée à une traction en utilisant les premier moyens de pression (premier circuit C1) pour plaquer la membrane M contre la surface interne dudit échantillon ET, les deuxièmes moyens de pression (deuxième circuit C2) pour appliquer localement une première pression interne (radiale) PI1 sur la paroi interne de l'échantillon ET, et les troisièmes moyens de pression (troisième circuit C3) pour appliquer dans chaque zone d'action ZA une seconde pression interne (axiale) PI2 entre les organes d'obturation B1 et B2, via le tube TU du packer P.

Il est important de noter qu'un test de sollicitation mécanique peut comporter une unique phase, dans laquelle l'intensité de chaque sollicitation (pression et/ou traction) est sensiblement constante, ou bien une séquence d'au moins deux phases dans lesquelles l'une au moins des intensités des sollicitations varie d'une phase à l'autre.

Un test peut notamment être réalisé en plusieurs phases, chacune réalisée avec une combinaison particulière de sollicitations de manière, par exemple, à explorer une partie du contour de l'ellipse de Von Mises ou tout autre ligne définie à partir de l'ellipse, par exemple une portion de ligne homothétique de l'ellipse.

Un test est défini par un fichier paramétré par un technicien. Il peut être éventuellement repris s'il a été interrompu. Un tel fichier contient toutes les informations relative à l'échantillon ET (référence, diamètre) et aux pressions des circuits C1 à C3, et les paramètres de mesures et de surveillance.

Comme cela est illustré sur la figure 1, lorsque l'on souhaite solliciter l'échantillon ET de façon dynamique, la partie de l'installation 1 dédiée à la sollicitation doit comporter des moyens, complémentaires des moyens de pression (M, C1 à C3), et couplés à l'échantillon ET afin de le soumettre à une excitation vibratoire choisie destinée à le déformer par flexion cyclique.

Ces moyens complémentaires se présentent de préférence sous la forme de deux moyens de support S1, S2 de l'échantillon ET, et d'un moteur rotatif MT, reliés à des moyens d'excitation couplés à une extrémité de l'échantillon ET.

Par exemple, et comme illustré sur la figure 1, chaque moyen de support 5.1, S2 est réalisé sous la forme d'un support mobile dont la position peut varier en fonction des besoins tant en terme de sollicitation que de dimension d'échantillon ET. Par exemple chaque support mobile S1, S2 est constitué d'un vérin souple du type de ceux commercialisés sous la marque "pneuride" par la société FirestonesBridgestone.

Comme illustré sur la figure 6, les moyens d'excitation sont par exemple constitués d'un boîtier BO solidarisé fixement à une extrémité de l'échantillon ET et logeant à rotation un dispositif à masse excentrée DME monté à rotation sur un arbre de support AR'. Ce dispositif à masse excentrée DME définit un balourd pour l'extrémité concernée de l'échantillon ET.

La liaison entre le moteur MT et l'arbre support des moyens d'excitation peut être une liaison directe ou une liaison homocinétique LH, par exemple de type cardan ou articulation plastique, qui assure le couplage entre une arbre de sortie AR du moteur MT et des moyens d'excitation.

Un couplage par liaison homocinétique comme représenté à la figure 1 présente l'avantage de permettre une fixation du moteur MT au bâti de l'installation et de ne pas soumettre le moteur à de fortes vibrations.

Un couplage direct nécessite d'embarquer le moteur en bout de l'échantillon ET mais présente d'autres avantages qui seront discutés ci-après.

Par exemple on peut utiliser un moteur MT d'une puissance électrique de 15 kW et pouvant entraîner un arbre AR à une vitesse de rotation maximale d'environ 3000 tours/minutes.

Par exemple, et comme cela est illustré sur la figure 6, le dispositif à masse excentrée DME est monté à rotation dans le boîtier BO grâce à deux roulements à billes RB.

Lorsque le moteur MT entraîne en rotation la masse excentrée, celle-ci contraint le boîtier BO à vibrer radialement. L'échantillon ET étant placé sur deux supports S1 et S2 et l'une de ses extrémités étant solidarisée au boîtier BO, l'échantillon ET est donc également contraint de vibrer. Il est ainsi soumis à une excitation vibratoire choisie qui est fonction (notamment) du balourd défini par le dispositif à masse excentrée DME et qui provoque sa déformation par flexion. Plus précisément, une onde de flexion, dont la fréquence fondamentale est égale à celle de rotation du balourd, se propage dans l'échantillon ET de façon rotative par rapport à son axe longitudinal au repos.

Ce type d'excitation permet de reproduire une sollicitation avez une contrainte tournante et/ou une déformation tournante par exemple du type de celle qui est générée par les déplacements d'une plate-forme offshore et/ou les courants marins et/ou par la mise en rotation d'une colonne tubulaire qui est descendue dans un puits dévié de la verticale.

Il est hautement préférable pour la stabilité de l'échantillon en cours d'essai de disposer les deux supports S1 et S2 à des noeuds de vibration.

Ceci n'est en général pas possible dans le cas de l'installation avec liaison homocinétique LH car celle-ci est obligatoirement située à un noeud de vibration. Seul le support S1 peut alors être disposé à un noeud de vibration. L'autre support S2 peut être de ce fait soumis à d'importantes vibrations.

Dans le cas d'une liaison directe entre moteur MT et moyens d'excitation on peut disposer les deux supports S1, S2 aux noeuds de vibration, ce qui est avantageux et préféré.

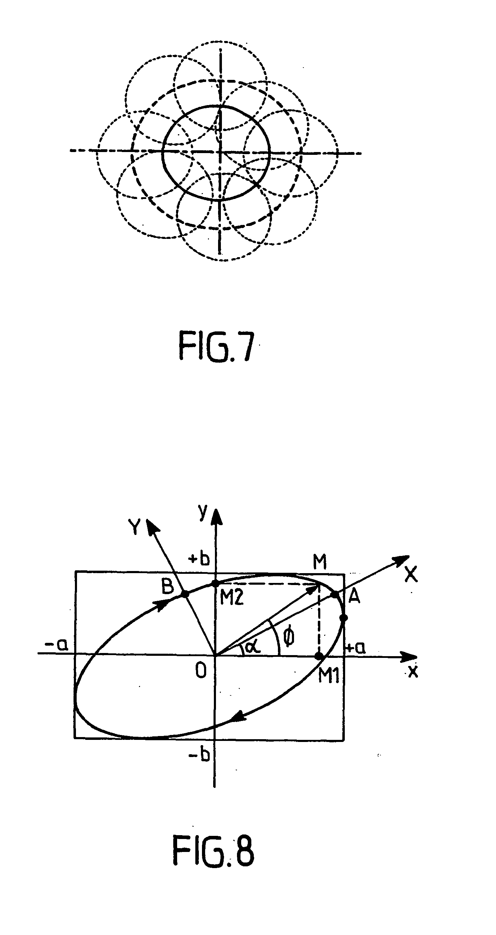

La trajectoire suivie par l'échantillon ET, au niveau de la section matérialisée par les flèches VII-VII de la figure 1, est illustrée schématiquement sur la figure 7. Le cercle central en trait continu, matérialise la position initiale de l'échantillon ET au repos, les cercles en pointillés matérialisent des positions successives de l'échantillon ET lorsqu'il est soumis à l'excitation vibratoire, et le cercle en tirets matérialise la trajectoire de l'axe longitudinal de l'échantillon ET lorsqu'il est soumis à l'excitation vibratoire.

On peut ainsi imposer une amplitude de contrainte et/ou de déplacement radial de flexion sensiblement uniforme sur toute la circonférence de l'échantillon ET.

Par exemple on utilise une masse excentrée de masse inférieure ou égale à 30 kg et un mode d'excitation vibratoire dit de résolution 1 dont la fréquence de résonance est comprise entre environ 20 Hz et environ 30 Hz. On peut ainsi provoquer une flexion cyclique dont l'amplitude de déplacement radial peut dépasser la centaine de millimètres, par exemple environ 120 mm au niveau du centre de l'échantillon ET (ici occupé par la connexion filetée avec le manchon de raccordement MR), lorsque son diamètre est de 16" et sa longueur de quelques mètres.

Il est important de noter que plus la fréquence de rotation du moteur se rapproche de la fréquence de résonance, plus l'amplitude de l'onde de flexion à laquelle l'échantillon ET est soumis est grande. La vitesse de rotation du moteur MT peut être choisie grâce à un variateur VR recevant ses instructions (consignes) d'un module de contrôle MC sur lequel on reviendra plus loin.

On choisit de travailler sur une plage de vitesses de rotation inférieure à la fréquence de résonance de l'échantillon ET en mode 1. Cette fréquence de résonance dépend de paramètres de l'échantillon ET (tels que la longueur et le matériau) et d'autres paramètres (tels que le type de packer P et les fluides contenus dans l'échantillon ET). Elle peut théoriquement être déterminée à partir de calculs théoriques mais, compte tenu de la complexité des paramètres, elle est plutôt déterminée à partir d'essais avec et sans balourd (DME). D'une manière générale, plus la longueur de l'échantillon est courte, plus sa fréquence de résonance est grande.

La force d'excitation F à appliquer à l'extrémité de l'échantillon ET, pour obtenir une amplitude de déplacement donnée de l'échantillon dépend de la longueur de l'échantillon. Plus la langueur de l'échantillon ET est faible, plus la force d'excitation doit être élevée à amplitude de déplacement (ou de contrainte) dans l'échantillon donnée.

La force d'excitation F en fonction du balourd à utiliser (de masse M), du rayon r du centre d'inertie du balourd et de la vitesse de rotation N du moteur, est donnée par la formule :

$$F = M.r.\omega^2.\sin\omega t$$

où $\omega = 2\pi.N$ et N est donné en tours/s.

Typiquement on choisit une vitesse de rotation N inférieure de quelques hertz à la fréquence de résonance de mode 1.

Afin de permettre le contrôle de la vitesse de rotation du moteur MT, l'installation I comprend un module de contrôle MC qui est par exemple implanté dans un ordinateur PC. Plus précisément, le module de contrôle MC est chargé de réguler la vitesse de rotation à laquelle le moteur MT doit entraîner la masse excentrée DME afin que l'échantillon ET soit soumis à une excitation vibratoire permettant de provoquer une déformation par flexion cyclique d'amplitude de contrainte ou de déplacement radial sensiblement constante, déterminée lors d'une phase préliminaire de référence.

L'instauration de la déformation par flexion initiale se fait de préférence lors d'une étape préliminaire de référence sur un intervalle de temps donné. En effet, il est théoriquement possible de déterminer la vitesse de rotation désirée du moteur MT qui va permettre d'induire une déformation par flexion désirée de l'échantillon ET, compte tenu du balourd utilisé. Cependant, dans la pratique des ajustements de vitesse doivent être généralement effectués pour que la déformation réelle corresponde à la déformation désirée.

L'étape préliminaire de référence consiste donc à imposer au moteur MT, par exemple au moyen du module de contrôle MC, la vitesse initiale relativement basse, puis par exemple à lire l'amplitude de la contrainte subie par l'échantillon ET au moyen de l'une au moins des jauges de contrainte Jk. En comparant l'amplitude de contrainte mesurée à celle désirée on peut déterminer si la vitesse de rotation est appropriée (en cas d'équivalence) ou bien si la vitesse initiale doit être adaptée (en cas de différence). La comparaison peut être faite à la main par le technicien opérant ou bien automatiquement par le module de contrôle MC.

Si la déformation réelle n'est pas équivalente à la déformation désirée, on augmente la vitesse de rotation d'un incrément donné pour que la nouvelle vitesse de rotation induise l'amplitude de contrainte désirée. De nouveau cette incrémentation de la vitesse de rotation peut être faite à la main par le technicien opérant ou bien automatiquement par le module de contrôle MC.

Les différentes (premières) mesures de contrainte effectuées pour déterminer la vitesse de rotation à appliquer sont appelées premières mesures de référence.

On peut, à la place des (premières) mesures de contraintes, utiliser des (secondes) mesures d'accélération, délivrées par le premier couple d'accéléromètres Ai1 et Ai2, ainsi qu'éventuellement par les autres couples d'accéléromètres Ai'1 et Ai'2, qui servent alors de mesures de référence pour les déplacements radiaux subis par l'échantillon ET, et définir des secondes mesures de référence lorsque l'on a trouvé la vitesse de rotation induisant une amplitude de déplacement donné de l'échantillon.

Il est important de noter que les accéléromètres utilisés pour les secondes mesures ne doivent pas être disposés aux noeuds de vibration ni au voisinage de ceux-ci.

Une fois la vitesse de rotation déterminée à partir des premières ou secondes mesures de référence, le test de sollicitation peut commencer. Tout type de test peut être envisagé.

On peut par exemple déformer l'échantillon seulement en flexion cyclique grâce aux moyens d'excitation entraînés par le moteur MT. L'invention peut s'appliquer à des échantillons seulement testés en flexion cyclique (conditions purement dynamiques sans sollicitations cycliques superposées). Dans ce cas, seuls les moyens complémentaires sont utilisés (le packer, les moyens de pression et les organes d'obturation n'étant alors pas nécessaires).

On peut également déformer l'échantillon ET par flexion cyclique grâce aux moyens d'excitation entraînés par le moteur MT, tout en le soumettant à une pression pure en utilisant les premier moyens de pression (premier circuit C1) pour plaquer la membrane M contre la surface interne dudit échantillon ET, et les deuxièmes moyens de pression (deuxième circuit C2) pour appliquer localement une première pression interne (radiale) PI1 sur la paroi interne de l'échantillon ET.

On peut également déformer l'échantillon ET par flexion grâce aux moyens d'excitation entraînés par le moteur MT, tout en le soumettant à une traction pure en utilisant les premier moyens de pression (premier circuit C1) pour plaquer la membrane M contre la surface interne dudit échantillon ET, et les troisièmes moyens de pression (troisième circuit C3) pour appliquer dans chaque zone d'action ZA une seconde pression interne (axiale) PI2 entre les organes d'obturation B1 et B2, via le tube TU du packer P.

On peut enfin déformer l'échantillon ET par flexion grâce aux moyens d'excitation entraînés par le moteur MT, tout en le soumettant à une pression combinée à une traction en utilisant les premier moyens de pression (premier circuit C1) pour plaquer la membrane M contre la surface interne dudit échantillon ET, les deuxièmes moyens de pression (deuxième circuit C2) pour appliquer localement une première pression interne (radiale) PI1 sur la paroi interne de l'échantillon ET, et les troisièmes moyens de pression (troisième circuit C3) pour appliquer dans chaque zone d'action ZA une seconde pression interne (axiale) PI2 entre les organes d'obturation B1 et B2, via le tube TU du packer P.

Il est important de noter que l'utilisation du packer, des moyens de pression et des organes d'obturation embarqués avec l'échantillon selon l'invention permet très avantageusement de superposer une combinaison de sollicitations statiques à une sollicitation dynamique cyclique, ce que ne permettent pas de faire les installations d'essais avec vérins de l'art antérieur, et de choisir une combinaison de sollicitations statiques donnée ce que ne permettent pas les installations de l'art antérieur qui offrent une simple pressurisation intérieure au moyen d'un fluide.

Il est par ailleurs important de noter qu'un test de sollicitation dynamique peut comporter une unique phase, dans laquelle l'intensité de chaque sollicitation (déformation par flexion est pression et/ou traction) est sensiblement constante, ou bien une séquence d'au moins deux phases dans lesquelles l'une au moins des intensités des sollicitations varie d'une phase à l'autre. Par exemple, un test de sollicitation dynamique peut comporter une séquence de phases dans lesquelles la pression et/ou la traction sont maintenues sensiblement constantes tandis que la vitesse de rotation de la masse excentrée (DME) varie d'une phase à l'autre (par exemple de façon croissante).

Comme indiqué précédemment un test est défini par un fichier paramétré par un technicien. Un tel fichier contient notamment toutes les informations relatives à l'échantillon (référence, diamètre), à la condition de charge (masse du balourd, vitesse (ou fréquence) de rotation de chaque phase d'une séquence, nombre de cycles (ou tours) pour chaque phase) et aux pressions des circuits C1 à C3, ainsi que des paramètres de mesures et de surveillance.

Il est rappelé que le phénomène de fatigue se caractérise par l'apparition d'une fissure qui se propage notamment à travers la paroi de l'échantillon, au bout d'un certain nombre de cycles (ou de rotation du moteur).

Lorsqu'une fissure de fatigue se propage dans l'échantillon, il y a perte du « monolithisme » de l'échantillon et l'amplitude de la contrainte et/ou du déplacement radial que l'échantillon subit varie si la vitesse de rotation (ou fréquence) demeure constante.

D'autres causes avant l'apparition d'une fissure de fatigue peuvent entraîner des variations d'amplitude de contrainte ou de déplacement.

Par conséquent, si l'on souhaite que la déformation de l'échantillon ET, en contrainte ou en déplacement, demeure sensiblement constante du début à la fin d'un test de sollicitation, il faut que l'installation I comporte un système de rattrapage d'erreur reposant sur une régulation de la vitesse de rotation, imposée au balourd (DME) par le moteur MT, en fonction d'une comparaison entre les mesures effectuées et les mesures de référence.

La régulation de la vitesse de rotation repose au moins :

- sur les premières mesures de référence (contrainte) représentatives de l'amplitude de la contrainte subie initialement par l'échantillon ET,
- sur les premières mesures ultérieures représentatives de l'amplitude de la contrainte subie à tout moment par l'échantillon ET lors de l'essai.

En variante la régulation de la vitesse de rotation repose au moins :

- sur les secondes mesures de référence représentatives de l'amplitude ou des amplitudes de déplacement au niveau de chaque section d'échantillon ET équipée d'un couple d'accéléromètres et correspondant à l'amplitude de déformation initiale,
- sur les secondes mesures ultérieures représentatives du déplacement subi par l'échantillon ET en cours d'essai au niveau de sa section équipée du premier couple d'accéléromètres A11 et A12,
- ainsi qu'éventuellement sur les autres secondes mesures représentatives des autres déplacements subis par l'échantillon ET au niveau de ses autres sections équipées d'un autre couple d'accéléromètres Ai'1 et Ai'2. Le module de contrôle MC peut par exemple déterminer un écart relatif entre l'amplitude de déplacement, fournie par les dernières secondes mesures, et l'amplitude du déplacement par flexion désirée, puis comparer cet écart aux bornes d'un intervalle de tolérance dit de régulation choisi, de manière à adapter la vitesse de rotation du moteur MT chaque fois que l'écart est en dehors de l'intervalle de régulation. Un dépassement du seuil est ici considéré comme une erreur devant être rattrapée.

L'écart relatif est par exemple comparé aux bornes d'un intervalle de régulation fixé en pourcentage, par exemple égal à $\pm 2,5\%$. Si l'écart relatif entre la valeur correcte et la dernière valeur est en dehors de intervalle compris entre - 2,5% et +2,5%, alors l'erreur doit être rattrapée.

Un deuxième intervalle de tolérance dit de surveillance, par exemple égal au double de l'intervalle de régulation et centré sur celui-ci, peut être défini pour déclencher l'arrêt de l'essai si l'écart relatif est situé en dehors de ce deuxième intervalle.

Ce qui vient d'être dit pour les déplacements est transposable aux contraintes.

La correction de la vitesse de rotation effectuée par le module de contrôle MC est basée sur des mesures effectuées selon une fréquence choisie. Par exemple cette fréquence correspond à la fréquence de rotation de l'arbre AR entraîné par le moteur MT. Chaque rotation de l'arbre AR est par exemple détectée par un détecteur de rotation DR et se traduit par la génération d'un signal à destination du module de contrôle MC. Ainsi chaque fois que le module de contrôle MC a reçu un nombre de signaux égal à un nombre choisi il interroge les accéléromètres et/ou les jauges concerné(e)s par l'asservissement et utilise leurs (premières et/ou secondes) mesures pour procéder audit asservissement. Le détecteur de rotation DR est par exemple de type optique (il comporte par exemple un laser de lecture, éventuellement du type de celui commercialisé par la société Keyence).

Il est important de noter que l'asservissement peut se faire à partir des mesures délivrées par certaines au moins des jauges ou bien à partir des mesures délivrées par certains au moins des accéléromètres (déplacements) ou bien à partir à la fois des mesures délivrées par certains au moins des accéléromètres (déplacements) et des mesures délivrées par certaines au moins des jauges (contraintes).

Un exemple de calcul d'asservissement reposant sur les (secondes) mesures des accéléromètres est décrit ci-après (le calcul peut être effectué de la même façon sur les (premières) mesures de contraintes).

Cet exemple de calcul part de l'hypothèse que la déformée opérationnelle de l'échantillon ET est d'ordre 1, et par conséquent que l'amplitude du déplacement à la fréquence d'excitation au niveau de chaque section munie d'un couple d'accéléromètres est directement liée à la contrainte subie par l'échantillon ET. Dans ces conditions, pour maintenir constante la contrainte initiale, correspondant à la déformation initiale, il suffit de maintenir chaque amplitude de déplacement constante.

Chaque fois que le module de contrôle MC reçoit un signal (ou "top tour") du détecteur de rotation DR, il relève les (secondes) mesures effectuées par chaque couple d'accéléromètres et en déduit une première valeur d'amplitude maximale et la valeur de phase correspondante autour de la fréquence d'excitation.

Chaque valeur d'amplitude maximale est par exemple corrigée à partir de l'analyse spectrale du signal temporel délivré par les accéléromètres, en fonction de la résolution en fréquence et des valeurs des raies à la fréquence fn et aux fréquences $f_{n-1}$ et $f_{n+1}$ de part et d'autre de $f_n$, par un algorithme tel que celui présenté ci-dessous.

Soient $a_n$ l'amplitude maximale à la fréquence $f_n$ et $a_{n-1}$ et $a_{n+1}$ les amplitudes aux fréquences $f_{n-1}$ et $f_{n+1}$, et pf la résolution en fréquence, alors l'amplitude (d'accélération) corrigée $a'_n$ à la fréquence $f_n$ est donnée par la relation $a'_n = a_n/\rho a$, avec :

$$\Delta' f = \frac{\Delta f}{1 + \max\left(2, \dfrac{a_n}{\min(a_{n-1}, a_{n+1})}\right)}$$

et

$$\Delta a = \frac{\sin\left(\dfrac{\pi \Delta' f}{\Delta f}\right)}{\dfrac{\pi \Delta' f}{\Delta f}}$$

Ces amplitudes (d'accélération) corrigées sont ensuite converties en déplacements (u) par une double intégration spectrale, où :

$$u = \frac{a'_n}{(2\pi f)^2}$$

Les deux signaux délivrés par un couple d'accéléromètres et représentatifs d'un déplacement théorique sont ici de formes sinusoïdales.

L'orbite de ces deux signaux sur une même section d'échantillon ET décrit une ellipse dont le grand axe constitue l'amplitude maximale de déplacement sur la section de l'échantillon ET.

Comme cela est illustré sur la figure 8, cette ellipse est inscrite dans un rectangle dont les côtés a et b correspondent aux amplitudes (d'accélération) mesurées et corrigées. Ses axes principaux sont décalés d'un angle $\alpha$ avec les axes x, y suivant lesquels sont effectuées les mesures des couples d'accéléromètres.

Les équations paramétriques des deux signaux peuvent être exprimées de la manière suivante (visualisée sur la figure 8 pour un point M donné par exemple par le top tour) :

$OM_1$ : x = a cos$\omega$t
$OM_2$: y = b cos($\omega$t+$\Phi$), avec $\Phi \in [0, 2\pi[$
où $\Phi$ est un déphasage dynamique entre les signaux des deux accéléromètres.

En recherchant une équation d'ellipse de la forme :

$$\frac{X^2}{A^2}+\frac{Y^2}{B^2}=1$$

et en effectuant un changement de repère par rotation d'un angle $\alpha$, on aboutit à la formule suivante :

$$\alpha=\frac{1}{2}\arctan\left(2\cos\Phi\,\frac{ab}{a^2-b^2}\right)$$

avec $\alpha \in [0, \pi/2[$.

Les axes principaux de l'ellipse se déduisent alors de la manière suivante :

$$A=\sqrt{\frac{a^2b^2\sin^2\Phi}{b^2\cos^2\alpha+a^2\sin^2\alpha-2ab\sin\alpha\cos\alpha\cos\Phi}}$$

$$B=\sqrt{\frac{a^2b^2\sin^2\Phi}{b^2\sin^2\alpha+a^2\cos^2\alpha+2ab\sin\alpha\cos\alpha\cos\Phi}}$$

Le maximum de A et B correspond alors à l'amplitude maximale atteinte.

On peut vérifier qu'en posant $\Phi$ = 90° (qui correspond à une absence de déphasage dynamique et donc seulement à un déphasage statique entre les accéléromètres d'un couple), on retrouve bien $\alpha$ = 0°, A = a et B = b.

Le module de contrôle MC effectue ce calcul pour chaque section de l'échantillon ET équipée d'un couple d'accéléromètres et choisie initialement par le technicien.

Les valeurs de l'amplitude de déplacement de chaque section peuvent être éventuellement affichées sur l'écran de l'ordinateur PC. Cet affichage peut par exemple se faire sous la forme d'une superposition des dernières ellipses obtenues au moyen de chaque couple d'accéléromètres de chaque section d'analyse. Une mise à l'échelle des différentes ellipses superposées peut se faire par rapport au plus grand déplacement mesuré (par rapport à la gamme de valeurs d'entrée la plus grande).

Préférentiellement, le module de contrôle MC déterminé l'écart relatif choisi entre chaque amplitude de déplacement qu'il a déterminée et l'amplitude de déplacement correspondant aux (secondes) mesures de référence initiales. Cet écart est ensuite comparé aux bornes d'un intervalle de tolérance de régulation qui est défini par le technicien avant le début du test de sollicitation.

Lorsque l'écart relatif toléré (ou pourcentage de tolérance) est respecté au niveau de chaque section de l'échantillon ET, le test de sollicitation se poursuit avec la même vitesse de rotation que précédemment, ou bien avec une nouvelle vitesse (ou consigne) si ledit test comporte une nouvelle phase d'amplitude de déplacement différente.

Lorsque l'écart relatif (ou pourcentage de tolérance) n'est pas respecté au niveau de l'une au moins des sections de l'échantillon ET, le module de contrôle MC applique un incrément (défini par le technicien avant le début du test de sollicitation) positif ou négatif suivant la valeur de l'écart à la valeur en cours de la vitesse de rotation, de manière à définir la nouvelle valeur (ou consigne) de vitesse du moteur MT.

Lorsqu'un incrément a été appliqué, on peut par exemple prévoir que le module de contrôle MC continue ses calculs mais n'applique pas de nouvelle correction (nouvel incrément) pendant un temps d'attente défini initialement par le technicien. Cette règle est destinée à permettre à l'installation I de stabiliser sa réponse.

Il est important de noter que si à un moment donné la fréquence, qui correspond à la nouvelle vitesse de rotation (ou consigne) déterminée par le module de contrôle MC, dépasse une fréquence maximale initialement définie par le technicien, laquelle est légèrement inférieure à la fréquence de résonance de l'échantillon ET, le test de sollicitation est arrêté.

Il est également important de noter que le temps de réponse minimum de l'asservissement correspond à la résolution en fréquence choisie.

Lorsque l'asservissement ne porte que sur des (premières) mesures de contraintes, la consigne peut être corrigée par ajout d'incréments positifs ou négatifs de vitesse de rotation. Par exemple, on peut comparer les écarts relatifs de contrainte (jauges) par rapport aux bornes d'un intervalle de tolérance sur les contraintes. Dans ce cas, on peut décider d'augmenter la vitesse de rotation d'un incrément en cas de dépassement par le bas de la limite basse de l'intervalle de tolérance de régulation par l'écart relatif de contrainte. De même, on peut décider de diminuer la vitesse de rotation d'un incrément en cas de dépassement par le haut de la limite haute du second intervalle de tolérance de régulation par l'écart relatif de contrainte. Si l'écart relatif de contrainte est en dehors d'un intervalle de tolérance de surveillance double de l'intervalle de tolérance de régulation et centré sur celui-ci, on peut décider de l'arrêt du moteur MT et donc de l'essai.

Lorsque l'asservissement ne porte que sur des (secondes) mesures accélérométriques, la consigne peut être corrigée de manière similaire par ajout d'incréments positifs ou négatifs de vitesse de rotation : augmentation de la vitesse de rotation d'un incrément en cas de dépassement par le bas de la limite basse de l'intervalle de tolérance par l'écart relatif de déplacement et diminution de la vitesse de rotation d'un incrément en cas de dépassement par le haut de la limite haute du second intervalle de tolérance par l'écart relatif de déplacement. Si l'écart relatif de déplacement est en dehors d'un intervalle de tolérance de surveillance double de l'intervalle de tolérance de régulation et centré sur celui-ci, on peut décider de l'arrêt du moteur MT et donc de l'essai.

Lorsque l'asservissement porte à la fois sur des (secondes) mesures accélérométriques et sur des (premières) mesures de contraintes (jauges), la consigne peut également être corrigée par ajout d'incréments positifs ou négatifs. Par exemple, on peut comparer les écarts relatifs de déplacement (accéléromètres) par rapport à un intervalle de tolérance sur les déplacements (en pourcentage), comme indiqué ci-avant, et comparer les écarts de contrainte (jauges) par rapport à un intervalle de tolérance sur les contraintes (en pourcentage). Dans ce cas, on peut décider d'augmenter la vitesse de rotation d'un incrément en cas de dépassement par le bas de la limite basse du second intervalle de tolérance par l'écart relatif de contrainte quelle que soit la valeur de l'écart relatif de déplacement pourvu qu'il soit à l'intérieur de l'intervalle de tolérance de surveillance qui lui est attaché. De même, on peut décider de diminuer la vitesse de rotation d'un incrément en cas de dépassement de la limite haute du second intervalle de tolérance par le haut par l'écart relatif de contrainte, quelle que soit la valeur de l'écart relatif de déplacement pourvu qu'il soit à l'intérieur de l'intervalle de tolérance de surveillance qui lui est attaché. Au cas où l'écart relatif de contrainte ou celui de déplacement est en dehors de l'intervalle de tolérance de surveillance qui lui est attaché, on peut décider de l'arrêt du moteur MT et donc de l'essai. On peut aussi décider que si les écarts relatifs de contrainte et de déplacement exigent des incréments de vitesse de rotation de signe opposé, l'essai est arrêté.

L'installation peut également fonctionner en régime dit « dégradé ». Selon ce régime, essentiellement utilisé en présence d'une fissure de fatigue de taille notable du fait que la fissure de fatigue ne peut que limiter l'effet de la contrainte subie par l'échantillon ET, on augmente la vitesse de rotation d'un incrément lorsque l'on sort de l'intervalle de tolérance de régulation.

On va maintenant décrire plus en détail, en référence à la figure 1, les équipements permettant à l'installation 1 de mettre en oeuvre sa régulation ou plus simplement de prélever les mesures effectuées par ses différents capteurs, et notamment ses jauges de contrainte Jk et ses couples d'accéléromètres Ai1, Ai2.

L'ordinateur PC est par exemple équipé d'une carte d'entrées/sorties analogiques et numériques CI et d'une carte d'analyse CA.

La carte d'entrées/sorties analogiques et numériques CI est par exemple de type Measurement Computing PCI-DAS 1602/16. Une telle carte comprend par exemple:

- 8 entrées numériques permettant d'obtenir des informations logiques sur et pour les moyens de sollicitation (ou banc), comme par exemple une autorisation de démarrage ou une détection de présence d'échantillon ET. Ces 8 entrées sont de préférence paramétrables par le technicien;
- 8 entrées analogiques permettant de recevoir des signaux (ou mesures) continues (ou DC) « lents », comme par exemple les pressions (CP) ou la température (CT);
- 4 sorties numériques permettant de fournir des instructions de fonctionnement à l'armoire de commande ARC qui comporte le variateur VR. L'une des sorties numériques est par exemple utilisée comme chien de garde (ou "WatchDog"). Le module de contrôle MC est alors chargé de changer l'état de cette sortie WatchDog à intervalles réguliers. Ce changement d'état est fourni à un relais temporisé de l'armoire ARC. Ainsi, en cas d'arrêt intempestif de l'application (provoqué par exemple par une panne logicielle ou une panne de composant(s)) le relais temporisé arrête le fonctionnement du moteur MT;
- 1 sortie analogique permettant d'imposer la consigne du variateur VR.

La carte d'analyse CA est par exemple de type OROS OR25 PC_PACK II-316 (à 16 voies d'entrée). Elle est chargée de collecter et analyser les mesures alternatives (AC) délivrées par certains capteurs (jauges de contrainte, accéléromètres), sous la forme de signaux dynamiques.

Les mesures des jauges de contrainte Jk sont préférentiellement conditionnées par un module de conditionnement de signaux MCS, par exemple de type centrale de mesure HBM, avant d'être transmis à la carte d'analyse CA.

La carte d'analyse CA est par exemple raccordée à l'ordinateur PC par une carte d'interface PCI / PCMCIA

La partie dédiée à l'analyse des signaux au sein de la carte d'analyse CA comprend par exemple un analyseur OR25 comportant un module d'analyse de type OR763 pour l'analyse fréquentielle par transformée de Fourier rapide ou FFT (pour "Fast Fourier Transform"), et un module d'enregistrement de type OR773.

Le mode de mesures utilisé par l'analyseur OR 25 est par exemple le mode FFT en temps réel. Compte tenu de la plage de fréquences d'excitation vibratoire (typiquement 10 à 50 Hz), la bande d'analyse à utiliser doit être définie entre environ 50 et 100 Hz.

Lorsque le pas de variation du réglage de la vitesse, avec le potentiomètre du variateur VR, est de l'ordre de 2/100ème de tour, cela correspond à une variation en fréquence de l'ordre de 0,1 Hz. La résolution de mesure (qui est définie par le rapport entre la bande d'analyse et le nombre de lignes spectrales) doit donc être inférieure ou égale à ce pas de variation. La durée de chaque mesure est inversement proportionnelle à cette résolution en fréquence : par exemple pour une résolution de 0,05 Hz, la durée de mesure est de 20 secondes. Le réglage de cette résolution s'effectue dans l'analyseur par l'intermédiaire du nombre de lignes spectrales. Le technicien a la possibilité de modifier ce réglage de résolution afin de maîtriser la durée de mesure.

L'analyseur OR 25 effectue des mesures de spectres en module et en phase, synchronisées sur le signal tachymétrique délivré par le détecteur de rotation (ou de tour ou de cycle) DR auquel il est couplé. Ces mesures sont de préférence moyennées dans le temps. Un réglage du nombre de moyennes temporelles peut être envisagé. Le module de contrôle MC calcule et permet d'afficher sur l'écran de l'ordinateur PC la durée d'une acquisition. Par définition, la durée de l'intervalle de temps compris entre deux mesures d'asservissement est égal au produit de la durée d'acquisition par le nombre de moyennes défini.

Il est avantageux de gérer les saturations des voies d'entrée de la carte d'analyse CA. Dans ce cas, on spécifie pour chaque voie de l'analyseur une gamme de valeurs d'entrée pour le convertisseur analogique/numérique de la carte d'analyse CA. L'analyseur permet de détecter une saturation du convertisseur pendant la mesure, caractéristique d'une mesure erronée. Le réglage des gammes de valeurs d'encrée permet de disposer de toute la dynamique numérique du convertisseur (par exemple 16 bits) pour les mesures.

L'analyseur OR25 peut également disposer d'un mode d'auto-calibration des gammes de valeurs d'entrée. A partir des signaux maximums, il détermine alors les réglages de gammes optimaux pour chacune des voies d'entrée. Une marge de sécurité peut-être éventuellement ajoutée à chaque optimum.

Le technicien peut donc spécifier pour chaque voie d'entrée, une gamme de valeurs d'entrée fixe ou automatique (et une éventuelle marge de sécurité associée). Il est important de noter qu'en cours de test toute détection de saturation pendant une mesure provoque l'enregistrement d'un événement et l'arrêt du test.

L'analyseur OR 25 fournit pour chaque couple d'accéléromètres utilisé une valeur de phase cadencée par chaque signal tachymétrique (ou top tour) délivré par le détecteur de rotation DR. Cette valeur de phase est en fait représentative du déphasage relatif entre les deux accéléromètres d'un couplé implantés au niveau d'une section de l'échantillon ET. L'analyseur OR25 offre une parfaite synchronisation des différents signaux mesurés par rapport à chaque signal top tour.

La mesure de phase ne peut s'effectuer correctement que si le signal top tour est présent. En cas de perte du signal tachymétrique, l'analyseur ne déclenche pas les mesures. Le module de contrôle MC détecte un problème lorsqu'aucun signal top tour n'est détecté dans un délai choisi (par exemple égal à 2 secondes).

Les signaux des jauges de contrainte Jk sont de préférence collectés et analysés en même temps que les signaux délivrés par les couples d'accéléromètres. On peut ainsi suivre sur l'écran de l'ordinateur PC l'évolution de la contrainte subie par l'échantillon testé au niveau de chaque section équipée d'une jauge de contrainte Jk.

La sortie du détecteur de rotation DR est par exemple raccordée non seulement à la carte d'analyse CA mais également à un boîtier de comptage de tours BCT, tel qu'un boîtier ADAM 4080, lui même relié via un bus RS485 à un boîtier de communication BCN, tel qu'un boîtier ADAM 4520, raccordé à un port série de l'ordinateur PC par une liaison RS232C.

Le comptage du nombre de tours permet de déterminer le nombre de cycles de flexion subi par l'échantillon depuis le démarrage de l'essai jusqu'à son arrêt (par rupture de l'échantillon, fuite de pression interne, incapacité d'asservissement dans l'intervalle de tolérance spécifié, fonctionnement trop près de la fréquence de résonance, ou tout autre cause prévue pour déclencher l'arrêt de l'essai).

Le comptage des tours (ou rotations ou cycles) par le module de contrôle MC s'effectue par une lecture régulière des trames sur le port série. Par exemple, chaque erreur de communication reconnue pendant la régulation par asservissement engendre un défaut de comptage du nombre de tours (ou cycles) qui interrompt l'asservissement.

Le module de contrôle MC peut être réalisé sous la forme de circuits électroniques (ou "hardware"), de modules logiciels (ou informatiques ou "software"), ou d'une combinaison de circuits électroniques et de modules logiciels.

L'invention ne se limite pas aux modes de réalisation d'installation de sollicitation et de procédé de sollicitation décrits ci-avant, seulement à titre d'exemple, mais elle englobe toutes les variantes que pourra envisager l'homme de l'art dans le cadre des revendications ci-après.

L'invention vise par exemple à s'appliquer à un échantillon tubulaire constitué de deux tubes raccordés entre eux par tout autre mode de raccordement que par filetages.

Les échantillons peuvent ainsi être constitués de deux tubes raccordés par toutes sortes de procédés de soudage, le terme procédé de soudage étant ici pris au sens large et couvrant notamment les procédés de soudage avec fusion (avec ou sans matériau d'apport) ou sans fusion, de soudo-brasage ou de brasage, de diffusion à l'état solide et/ou à l'état liquide (décrits par exemple dans les documents brevet EP1418376, US6288373, WO99/08828), ou encore par interpénétration des matériaux des surfaces à raccorder, du type par exemple magnétoformage ou formage par explosion.

Les échantillons peuvent aussi comprendre deux tubes raccordés par une ou des pièces de liaison telles que, par exemple, des brides rapportées en extrémités des tubes.

Les raccordements entre tubes peuvent également être des connexions du type décrit dans le brevet US5681059, fonctionnant par coopération de séries de reliefs et rainures annulaires mâles et femelles disposés sur la surface extérieure d'un tube et la surface intérieure de l'autre tube.

L'invention vise aussi à s'appliquer à un échantillon tubulaire constitué de plus de deux tubes raccordés deux à deux entre eux par tout mode de raccordement. On peut alors notamment définir une zone à tester au niveau de chaque raccordement ou connexion. On peut dans ce cas utiliser plusieurs packers. Alternativement, on peut utiliser un packer sur lequel plusieurs zones à tester ont été définies. On peut aussi utiliser plusieurs deuxièmes moyens de pression pour exercer des premières pressions internes indépendantes les unes des autres dans chacune des zones à tester.

On peut encore utiliser plusieurs troisièmes moyens de pression pour exercer des secondes pressions internes indépendantes l'une de l'autre.

### Revendications

1.  Installation (I) de sollicitation mécanique d'un échantillon tubulaire (ET), **caractérisée en ce qu'**elle comprend au moins un packer (P) logé dans ledit échantillon (ET) au niveau d'une zone à tester (ZT), présentant une extension longitudinale supérieure à celle de ladite zone à tester (ZT) et comportant i) des premiers moyens de pression (C1) propres à faire varier localement le diamètre d'au moins une première partie dudit packer de manière à l'appliquer contre une surface interne dudit échantillon (ET) au niveau de la zone à tester (ZT), ii) des deuxième moyens de pression (C2) propres à exercer une première pression interne choisie sur une partie de ladite surface interne située au niveau d'une deuxième partie dudit packer (P), et/ou iii) des troisièmes moyens de pression (C3) propres à coopérer avec au moins un organe d'obturation (B1,B2), solidarisé à l'échantillon à distance d'une extrémité dudit packer (P) pour définir une zone d'action (ZA), de manière à exercer sur ledit échantillon (ET) une seconde pression interne choisie au niveau de ladite zone d'action (ZA).

2.  Installation selon la revendication 1, **caractérisée en ce qu'**elle comprend au moins une jauge de contrainte (Jk) destinée à être placée en un endroit choisi d'une surface externe dudit échantillon (ET) de manière à délivrer des premières mesures de contraintes représentatives de l'état de contrainte subi par ledit échantillon au niveau dudit endroit choisi.

3.  Installation selon l'une des revendications 1 et 2, **caractérisée en ce qu'**elle comprend au moins deux jauges de contrainte (Jk) destinées à être placées en deux endroits différents choisis de ladite surface externe de l'échantillon (ET) de manière à délivrer des premières mesures de contraintes représentatives de l'état de contrainte subi par ledit échantillon au niveau de chacun desdits endroits choisis.

4.  Installation selon l'une des revendications 1 à 3, **caractérisée en ce qu'**elle comprend en outre i) deux moyens de support (S1, S2) propres à supporter ledit échantillon (ET), ii) un moteur rotatif (MT) couplé à un moyen d'excitation (BO,AR'), équipé d'un dispositif à masse excentrée (DME) couplé à une extrémité de l'échantillon (ET) et définissant un balourd, et iii) des moyens de contrôle (MC) propres à ordonner l'entraînement en rotation selon une vitesse ajustable, par ledit moteur (MT), de ladite masse excentrée de manière à soumettre ledit échantillon (ET) à une excitation vibratoire choisie, fonction dudit balourd, pour le déformer cycliquement par flexion.

5.  Installation selon la revendication 4, **caractérisée en ce que** l'un au moins desdits moyens de support (S1, S2) est agencé pour que sa position corresponde sensiblement à un noeud de vibration dudit échantillon.

6. Installation selon l'une des revendications 2 et 3 en combinaison avec les revendications 4 et 5, **caractérisée en ce que** lesdits moyens de contrôle (MC) sont agencés pour adapter la vitesse de rotation du moteur (MT) en fonction de l'amplitude d'une contrainte que l'on veut faire subir audit échantillon (ET).

7. Installation selon l'une des revendications 4 à 6, **caractérisée en ce qu'**elle comprend au moins un couple d'accéléromètres (A11, A12) destinés à être placés à 90° l'un de l'autre en des endroits choisis de ladite surface externe de l'échantillon (ET) de manière à délivrer des secondes mesures représentatives d'un déplacement subi par ledit échantillon, et **en ce que** lesdits moyens de contrôle (MC) sont agencés pour adapter la vitesse de rotation du moteur (MT) en fonction des dernières secondes mesures délivrées par ledit couple d'accéléromètres (A11,A12) de sorte que l'amplitude du déplacement radial par flexion subi par ledit échantillon (ET) à un endroit choisi demeure sensiblement constante.

8. Installation selon la revendication 7, **caractérisée en ce qu'**elle comprend au moins deux couples d'accéléromètres (A11, A12, Ai'1, Ai'2), les accéléromètres de chaque couple étant destinés à être placés à 90° l'un de l'autre en d'autres endroits choisis de ladite surface externe de l'échantillon (ET) de manière à délivrer d'autres secondes mesures prises au niveau des autres endroits choisis et représentatives de déplacements subis par ledit échantillon audits autres endroits choisis, et **en ce que** lesdits moyens de contrôle (MC) sont agencés pour effectuer des combinaisons des dernières secondes mesures de manière à adapter la vitesse de rotation du moteur (MT) en fonction desdites combinaisons de sorte que l'amplitude de déplacement par flexion subie par ledit échantillon auxdits endroits choisis demeure sensiblement constante.

9. Installation selon la revendication 8, **caractérisée en ce que** ledit échantillon tubulaire (ET) étant constitué d'au moins deux composants tubulaires (T1, T2) raccordés entre eux au niveau de ladite zone à tester (ZT), deux desdits couples d'accéléromètres (A11, A12, Ai'1, Ai'2) sont placés de part et d'autre du raccordement.

10. Installation selon l'une des revendications 7 à 9, **caractérisée en ce que** lesdits moyens de contrôle (MC) sont agencés pour comparer au moins lesdites dernières secondes mesures délivrées par l'un au moins desdits couples d'accéléromètres (Ai1, Ai2, Ai'1, Ai'2) à des secondes mesures de référence représentatives d'une amplitude de déplacement initiale correspondant à une amplitude de déplacement par flexion désirée à l'endroit choisi, puis pour adapter ladite vitesse de rotation du moteur (MT) en fonction du résultat de ladite comparaison.

11. Installation selon la revendication 10, **caractérisée en ce que** lesdits moyens de contrôle (MC) sont agencés pour déterminer un écart relatif entre l'amplitude de déplacement, représentée par lesdites dernières secondes mesures, et ladite amplitude du déplacement par flexion désirée, puis pour comparer cet écart à un intervalle de tolérance dit de régulation, de manière là adapter ladite vitesse de rotation du moteur (MT) lorsque ledit écart est en dehors dudit intervalle de régulation.

12. Installation selon l'une des revendications 4 à 11, **caractérisée en ce qu'**elle comprend un dispositif de détection de rotation (DR) propre à détecter chaque rotation imposée par ledit moteur (MT).

13. Installation selon la revendication 12, **caractérisée en ce que** ledit dispositif de rotation (DR) est agencé pour adresser auxdits moyens de contrôle (MC) un signal représentatif de chaque rotation détectée, de sorte qu'ils adaptent ladite vitesse de rotation du moteur (MT) chaque fois que le nombre de signaux reçus est égal à un nombre choisi.

14. Installation selon l'une des revendications 1 à 13, **caractérisée en ce que** ledit packer (P) comprend un support sensiblement non déformable (TU) sur lequel est montée une membrane annulaire déformable (M), et **en ce que** lesdits premiers moyens de pression comprennent un premier circuit d'alimentation en fluide (C1) propre à introduire un fluide choisi entre ledit support sensiblement non déformable (TU) et ladite membrane (M) de manière à instaurer une pression choisie.

15. Installation selon la revendication 14, **caractérisée en ce que** ledit fluide est un liquide pressurisé.

16. Installation selon l'une des revendications 1 à 15, **caractérisée en ce que** lesdits deuxièmes moyens de pression comprennent un deuxième circuit d'alimentation en fluide (C2) comportant une sortie de fluide débouchant en regard de ladite surface interne de l'échantillon (ET) de manière à instaurer ladite première pression interne choisie.

**17.** Installation selon la revendication 16, **caractérisée en ce que** ledit deuxième circuit d'alimentation en fluide (C2) traverse de façon étanche ladite membrane (M).

**18.** Installation selon l'une des revendications 16 et 17, **caractérisée en ce qu'**elle comprend des moyens de détection de fuite (MDF), placés à proximité de la surface externe dudit échantillon (ET) dans ladite zone à tester (ZT) et agencés pour détecter en périphérie dudit échantillon (ET) une éventuelle fuite du fluide délivré par ledit deuxième circuit d'alimentation (C2).

**19.** Installation selon l'une des revendications 16 à 18, **caractérisée en ce que** ledit fluide circulant dans lesdits deuxièmes moyens de pression est un gaz.

**20.** Installation selon l'une des revendications 1 à 19, **caractérisée en ce que** lesdits troisièmes moyens de pression comprennent un troisième circuit d'alimentation en fluide (C3) propre à alimenter en fluide chaque zone d'action de manière à exercer sur ledit échantillon (ET) ladite seconde pression interne choisie.

**21.** Installation selon la revendication 20, **caractérisée en ce que** ledit fluide desdits troisièmes moyens de pression est un liquide pressurisé.

**22.** Installation selon l'une des revendications 20 et 21, **caractérisée en ce qu'**elle comprend un dispositif d'aiguillage (DA) raccordé auxdits premier (C1) et troisième (C3) circuits d'alimentation en fluide et une pompe (PE) couplée audit dispositif d'aiguillage (DA).

**23.** Installation selon la revendication 14 en combinaison avec l'une des revendications 20 à 22, **caractérisée en ce que** ledit support (TU) du packer (P) est un tube formant un conduit central creux définissant une partie dudit troisième circuit d'alimentation en fluide (C3) et comprenant deux extrémités opposées dont l'une au moins débouche dans une zone d'action (ZA) de manière à l'alimenter en fluide.

**24.** Installation selon l'une des revendications 1 à 23, **caractérisée en ce qu'**elle comprend deux organes d'obturation (B1, B2), installés à distance des deux extrémités dudit packer (P) pour définir au moins une zone d'action (ZA), de manière à exercer sur ledit échantillon ladite seconde pression interne choisie au niveau de ladite zone d'action (ZA).

**25.** Installation selon la combinaison des revendications 23 et 24, **caractérisée en ce qu'**une partie dudit premier circuit d'alimentation en fluide (C1) et/ou une partie dudit deuxième circuit d'alimentation en fluide (C2) est logée à l'intérieur dudit conduit central.

**26.** Installation selon l'une des revendications 1 à 25, **caractérisée en ce qu'**elle comprend au moins un capteur de température (CT) destiné à être installé en un endroit choisi dudit échantillon (ET) de manière à délivrer des troisièmes mesures représentatives de la température dudit échantillon en cet endroit choisi.

**27.** Installation selon l'une des revendications 1 à 26, **caractérisée en ce qu'**elle comprend au moins un capteur de pression (CP) destiné à être installé en un endroit choisi dudit échantillon (ET) de manière à délivrer des quatrièmes mesures représentatives de la pression interne dudit échantillon en cet endroit choisi.

**28.** Installation selon l'une des revendications 1 à 27, **caractérisée en ce que** lesdits moyens de contrôle-sont agencés pour comparer des premiers résultats issus de certaines au moins desdites premières mesures à des seconds résultats issus de certaines au moins desdites secondes mesures de manière à autoriser la poursuite du test lorsque les premiers résultats sont compatibles avec les seconds résultats.

**29.** Installation selon l'une des revendications 4 à 27, **caractérisée en ce que** lesdits moyens de contrôle (MC) sont agencés pour ordonner audit moteur (MT), au cours d'un test de sollicitation, d'entraîner ladite masse excentrée (DME) en rotation selon une séquence choisie de vitesses de rotation de manière à soumettre ledit échantillon (MT) à une séquence choisie d'excitations vibratoires.

**30.** Procédé de sollicitation mécanique d'un échantillon tubulaire (ET), **caractérisé en ce qu'**il consiste à introduire dans ledit échantillon (ET), au niveau d'une zone à tester (ZT), au moins un packer (P) présentant une extension longitudinale supérieure à celle de ladite zone à tester (ZT) et comportant des premiers (C1) et deuxièmes (C2) et/ou troisièmes (C3) moyens de pression, puis à faire varier localement le diamètre d'au moins une première partie dudit packer (P) avec lesdits premiers moyens de pression (C1) de manière à appliquer ledit packer (P) contre une surface interne dudit échantillon (ET) au niveau de la zone à tester (ZT), et à exercer avec lesdits deuxièmes moyens de pression (C2) une première pression interne choisie sur une partie de ladite surface interne située au niveau d'une deuxième partie du packer (P), et/ou à solidariser à l'échantillon (ET) au moins un organe d'obturation (B1,B2), à distance d'une extrémité dudit packer (P), pour définir une zone d'action (ZA), puis à exercer sur ledit échantillon (ET), avec lesdits troisièmes moyens de pression (C3), une seconde pression interne choisie au niveau de ladite zone d'action (ZA).

**31.** Procédé selon la revendication 30, **caractérisé en ce que** l'on prévoit en au moins un endroit choisi d'une surface externe dudit échantillon (ET) au moins une jauge de contrainte (Jk) de manière à obtenir des premières mesures de contraintes représentatives de l'état de contrainte subi par ledit échantillon au niveau dudit endroit choisi.

**32.** Procédé selon l'une des revendications 30 et 31, **caractérisé en ce que** l'on prévoit en au moins deux endroits choisis de la surface externe dudit échantillon (ET) au moins deux jauges de contrainte (Jk) de manière à obtenir des premières mesures de contraintes représentatives de l'état de contrainte subi par ledit échantillon au niveau de chacun desdits endroits choisis.

**33.** Procédé selon l'une des revendications 30 à 32, **caractérisé en ce que** l'on prévoit en outre deux moyens de support (S1,S2) sur lesquels sont installés ledit échantillon (ET), et un moteur rotatif (MT) couplé à un moyen d'excitation (B,AR'), équipé d'un dispositif à masse excentrée (DME) couplé à une extrémité de l'échantillon (ET) et définissant un balourd, et on entraîne ladite masse excentrée (DME) en rotation, au moyen dudit moteur (MT), selon une vitesse ajustable, de manière à soumettre ledit échantillon (ET) à une excitation vibratoire choisie, fonction dudit balourd, pour le déformer cycliquement par flexion.

**34.** Procédé selon la revendication 33, **caractérisé en ce que** l'on place l'au moins desdits moyens de support (S1, S2) au niveau d'un noeud de vibration dudit échantillon (ET).

**35.** Procédé selon l'une des revendications 31 et 32 en combinaison avec la revendication 33, **caractérisé en ce qu'**au cours d'une étape préliminaire de référence on choisit tout d'abord la vitesse de rotation initiale du moteur (MT) en fonction de l'amplitude d'une contrainte que l'on veut faire subir audit échantillon (ET).

**36.** Procédé selon la revendication 35, **caractérisé en ce qu'**après l'étape préliminaire de référence, on adapte ladite vitesse de rotation du moteur (MT) de sorte que l'amplitude de la contrainte de flexion subie par ledit échantillon (ET) et représentée par des premières mesures demeure sensiblement constante.

**37.** Procédé selon l'une des revendications 33 à 36, **caractérisé en ce que** l'on prévoit en des endroits choisis de ladite surface externe de l'échantillon (ET) au moins un couple d'accéléromètres (A11, A12) décalés l'un de l'autre de 90° et destinés à délivrer des secondes mesures représentatives d'un déplacement subi par ledit échantillon (ET), et **en ce que** l'on adapte la vitesse de rotation du moteur (MT) en fonction des dernières secondes mesures délivrées par chaque couple d'accéléromètres (A11, A12) de sorte que l'amplitude du déplacement radial par flexion subi par ledit échantillon (ET) à l'endroit choisi demeure sensiblement constante.

**38.** Procédé selon la revendication 37, **caractérisé en ce que** l'on prévoit en d'autres endroits choisis de ladite surface externe de l'échantillon au moins deux autres couples d'accéléromètres (A11, A12, Ai'1, Ai'2), les accéléromètres de chaque couple étant placés à 90° l'un de l'autre en d'autres endroits choisis de ladite surface externe de l'échantillon (ET) et destinés à délivrer d'autres secondes mesures représentatives de déplacements subis par ledit échantillon (ET) au niveau des autres endroits choisis, et **en ce que** l'on effectue des combinaisons des dernières secondes mesures de manière à adapter la vitesse de rotation du moteur (MT) en fonction desdites combinaisons, de sorte que l'amplitude de déplacement par flexion subie par ledit échantillon (ET) aux endroits choisis demeure sensiblement constante.

**39.** Procédé selon l'une des revendications 37 et 38, **caractérisé en ce que** l'on compare au moins lesdites dernières secondes mesures délivrées par au moins - un couple d'accéléromètres (A11, A12, Ai'1, Ai'2) à des secondes mesures de référence représentatives d'une amplitude de déplacement initial correspondant à une amplitude de déplacement par flexion désirée à l'endroit choisi, puis on adapte ladite vitesse de rotation du moteur (MT) en fonction du résultat de ladite comparaison.

**40.** Procédé selon la revendication 39, **caractérisé en ce que** l'on détermine un écart relatif entre l'amplitude de

**EP 1 853 893 B1**

déplacement, représentée par lesdites dernières secondes mesures, et ladite amplitude du déplacement par flexion désirée, puis on compare cet écart aux bornes d'un intervalle de tolérance dit de régulation, de manière à adapter la vitesse de rotation du moteur lorsque cet écart est en dehors dudit intervalle de régulation.

**41.** Procédé selon l'une des revendications 33 à 40, **caractérisé en ce que** l'on détecte chaque rotation imposée par ledit moteur (MT).

**42.** Procédé selon la revendication 41, **caractérisé en ce que** l'on adapte ladite vitesse de rotation du moteur (MT) chaque fois que le nombre de signaux reçus est égal à un nombre choisi.

**43.** Procédé selon l'une des revendications 30 à 42, **caractérisé en ce que** l'on prévoit au moins un capteur de température (CT) installé en un endroit choisi dudit échantillon (ET) de manière à obtenir des troisièmes mesures représentatives de la température dudit échantillon en cet endroit choisi.

**44.** Procédé selon l'une des revendications 30 à 43, **caractérisé en ce que** l'ou prévoit au moins un capteur de pression (CP) installé en un endroit choisi dudit échantillon (ET) de manière à obtenir des quatrièmes mesures représentatives de la pression interne dudit échantillon en cet endroit choisi.

**45.** Procédé selon l'une des revendications 33 à 44, **caractérisé en ce qu'**au cours d'un test de sollicitation, on ordonne audit moteur (MT) d'entraîner en rotation ledit dispositif à masse excentrée (DME) selon une séquence choisie de vitesses de rotation de manière à le soumettre à une séquence choisie d'excitations vibratoires.

**46.** Procédé selon l'une des revendications 30 à 45, **caractérisé en ce que** l'on compare des premiers résultats de contrainte issus de certaines au moins desdites premières mesures à des seconds résultats de déplacement radial issus de certaines au moins desdites secondes mesures de manière à autoriser la poursuite du test lorsque les premiers résultats sont compatibles avec les seconds résultats.

**47.** Procédé selon l'une des revendications 30 à 46, **caractérisé en ce que** l'on effectue une détection de fuite en périphérie dudit échantillon (ET), au niveau de ladite zone à tester (ZT).

**48.** Utilisation du procédé et de l'installation (I) selon l'une des revendications précédentes pour les sollicitations d'échantillons (ET) choisis dans un groupe comprenant i) un unique tube, ii) un premier composant tubulaire définissant un premier tube et un deuxième composant tubulaire définissant un second tube et raccordé par soudage audit premier tube, iii) un premier composant tubulaire définissant un premier tube muni d'un filetage mâle et un deuxième composant tubulaire définissant un second tube muni d'un filetage femelle destiné à coopérer avec ledit filetage mâle pour constituer une connexion filetée, iv) un premiers composant tubulaire définissant un premier tube muni d'un filetage mâle, un deuxième composant tubulaire définissant un second tube muni d'un filetage mâle, et un troisième composant tubulaire définissant un manchon de raccordement muni de deux filetages femelles destinés à coopérer respectivement avec lesdits filetages mâles pour constituer une connexion filetée, et v) un premier composant tubulaire définissant un premier tube, muni sur sa surface extérieure d'une sérié mâle de reliefs et de rainures annulaires, et un deuxième composant tubulaire définissant un second tube, muni sur sa surface intérieure d'une série femelle de reliefs et de rainures annulaires correspondant à ladite série mâle, destinée à coopérer avec ladite série mâle pour constituer une connexion entre les deux tubes.

**Claims**

**1.** A unit (I) for mechanically loading a tubular sample (ET), **characterized in that** it comprises at least one packer (P) housed in said sample at a test zone (ZT), having a longitudinal extension which is greater than that of said test zone (ZT) and comprising i) first pressure means (C1) suitable for locally varying the diameter of at least a first portion of said packer so as to apply it against an internal surface of said sample (ET) at the test zone (ZT), ii) second pressure means (C2) suitable for exerting a first selected internal pressure over a portion of said internal surface, located at a second portion of said packer (P), and/or iii) third pressure means (C3) suitable for cooperation with at least one plug member (B1, B2), attached to the sample at a distance from one end of said packer (P) to define a zone of action (ZA), so as to exert on said sample (ET) a second selected internal pressure at said zone of action (ZA).

**2.** A unit according to claim 1, **characterized in that** it comprises at least one strain gauge (Jk) intended to be placed at a selected region of an external surface of said sample (ET) so as to deliver first stress measurements repre-

21

sentative of a stress state undergone by said sample at the selected region.

3. A unit according to claim 1 or claim 2, **characterized in that** it comprises at least two strain gauges (Jk) intended to be placed in two different selected regions of said external surface of the sample (ET) so as to deliver first stress measurements representative of the stress state undergone by said sample at each of said selected regions.

4. A unit according to one of claims 1 to 3, **characterized in that** it further comprises i) two support means (S1, S2) suitable to support said sample (ET), ii) a rotary motor (MT) coupled to an excitation means (BO, AR'), provided with a device with an eccentric mass (DME) coupled to one end of the sample (ET) and defining an unbalanced mass, and iii) control means (MC) suitable to order rotation of said eccentric mass by said motor (MT) at an adjustable rate, so as to subject said sample (ET) to a selected vibratory excitation which is a function of said unbalanced mass, to cyclically deform it by bending.

5. A unit according to claim 4, **characterized in that** at least one of said support means (S1, S2) is arranged so that its position substantially corresponds to a vibration node of said sample.

6. A unit according to claim 2 or claim 3 in combination with claims 4 and 5, **characterized in that** said control means (MT) are arranged to adapt the rotary speed of the motor (MT) as a function of the amplitude of a stress to which said sample (ET) is to be subjected.

7. A unit according to one of claims 4 to 6, **characterized in that** it comprises at least one pair of accelerometers (A11, A12) intended to be placed at 90° to each other in selected regions of said external surface of the sample (ET) to deliver second measurements representative of a displacement undergone by said sample, and **in that** said control means (MC) are arranged to adapt the rotary speed of the motor (MT) as a function of last second measurements provided by said pair of accelerometers (A11, A12), so that the amplitude of the radial displacement by bending undergone by said sample (ET) at a selected region remains substantially constant.

8. A unit according to claim 7, **characterized in that** it comprises at least two pairs of accelerometers (A11, A12, Ai'2, Ai'2), the accelerometers of each pair being intended to be placed at 90° to each other at other selected regions of said external surface of the sample (ET) so as to deliver other second measurements taken at other selected regions and representative of displacements undergone by said sample at said other selected regions, and **in that** said control means (MC) are arranged to produce combinations of last second measurements so as to adapt the rotation rate of the motor (MT) as a function of said combinations so that the amplitude of the bending displacement undergone by said sample at said selected regions remains substantially constant.

9. A unit according to claim 8, **characterized in that** when said tubular sample (ET) is constituted by at least two tubular components (T1, T2) connected together at said test zone (ZT), two said pairs of accelerometers (A11, A12, Ai'1, Ai'2) are placed on both sides of the connection.

10. A unit according to one of claims 7 to 9, **characterized in that** said control means (MC) are arranged to compare at least said last second measurements delivered by at least one of said pairs of accelerometers (Ai1, Ai2, At'1, Ai'2) with second reference measurements representative of an initial displacement amplitude corresponding to a desired bending displacement amplitude at the selected region, then to adapt said rate of rotation of the motor (MT) as a function of the result of said comparison.

11. A unit according to claim 10, **characterized in that** said control means (MT) are arranged to determine a relative difference between the displacement amplitude represented by said last second measurements and said desired displacement amplitude by bending, then to compare this difference with a "regulation" tolerance interval, so as to adapt said rate of rotation of the motor (MT) when said difference is outside said regulation interval.

12. A unit according to one of claims 4 to 11, **characterized in that** it comprises a device for detecting rotation (DR) suitable to detect each rotation imposed by said motor (MT).

13. A unit according to claim 12, **characterized in that** said rotation detection device (DR) is arranged to send to said control means (MC) a signal representative of each detected rotation, so that they adapt said rotation rate of the motor (MT) each time the number of signals received is equal to a selected number.

14. A unit according to one of claims 1 to 13, **characterized in that** said packer (P) comprises a substantially non deformable support (TU) on which an annular deformable membrane (M) is mounted, and **in that** said first pressure means comprise a first fluid supply circuit (C1) suitable to introduce a selected fluid between said substantially non deformable support (TU) and said membrane (M) so as to apply a selected pressure.

15. A unit according to claim 14, **characterized in that** said fluid is a pressurized liquid.

16. A unit according to one of claims 1 to 15, **characterized in that** said second pressure means comprise a second fluid supply circuit (C2) comprising a fluid output opening facing said internal surface of the sample (ET) so as to apply said selected first internal pressure.

17. A unit according to claim 16, **characterized in that** said second fluid supply circuit (C2) traverses said membrane (M) in a sealed manner.

18. A unit according to claim 16 or claim 17, **characterized in that** it comprises leak detection means (DMF), placed close to the external surface of said sample (ET) in said test zone (ZT) and arranged to detect any leak of fluid delivered via said second supply circuit (C2) at the periphery of said sample (ET).

19. A unit according to one of claims 16 to 18, **characterized in that** said fluid moving in said second pressure means is a gas.

20. A unit according to one of claims 1 to 19, **characterized in that** said third pressure means comprise a third fluid supply circuit (C3) suitable to supply each zone of action with fluid so as to exert said selected second internal pressure on said sample (ET).

21. A unit according to claim 20, **characterized in that** said fluid of said third pressure means is a pressurized liquid.

22. A unit according to claim 20 or claim 21, **characterized in that** it comprises a routing device (DA) connected to said first (C1) and third C3) fluid supply circuits, and a pump (PE) coupled to said routing device (DA).

23. A unit according to claim 14 in combination with one of claims 20 to 22, **characterized in that** said support (TU) of the packer (P) is a tube forming a hollow central conduit defining a portion of said third fluid supply circuit (C3) and comprising two opposed ends at least one of which opens into a zone of action (ZA) to supply it with fluid.

24. A unit according to one of claims 1 to 23, **characterized in that** it comprises two plug members (B1, B2), installed at a distance from the two ends of said packer (P) to define at least one zone of action (ZA) so as to exert said selected second internal pressure on said sample at said zone of action (ZA).

25. A unit according to a combination of claims 23 and 24, **characterized in that** a portion of said first fluid supply circuit (C1) and/or a portion of said second fluid supply circuit (C2) is housed inside said central conduit.

26. A unit according to one of claims 1 to 25, **characterized in that** it comprises at least one temperature sensor (CT) for installation at a selected region of said sample (ET) so as to deliver third measurements representative of the temperature of said sample at said selected region.

27. A unit according to one of claims 1 to 26, **characterized in that** it comprises at least one pressure sensor (CP) for installation at a selected region of said sample (ET) so as to deliver fourth measurements representative of the internal pressure of the sample at said selected region.

28. A unit according to one of claims 1 to 27, **characterized in that** said control means are arranged to compare first results derived from at least some of said first measurements with second results derived from at least some of said second measurements, so as to authorize continuation of the test when the first results are compatible with the second results.

29. A unit according to one of claims 4 to 27, **characterized in that** said control means (MC) are arranged to order said motor (MT) during a loading test to drive said eccentric mass (DME) in rotation in accordance with a selected sequence of rotation rates so as to subject said sample (MT) to a selected sequence of vibratory excitations.

30. A method for mechanically loading a tubular sample (ET), **characterized in that** it consists of introducing into said sample (ET), at a test zone (ZT), at least one packer (P) having a longitudinal extension which is greater than that of the test zone (ZT) and comprising first (C1) and second (C2) and/or third (C3) pressure means, then locally varying the diameter of at least a first portion of said packer (P) with said first pressure means (C1) so as to apply said packer (P) against an internal surface of said sample (ET), at the test zone (ZT), and to exert with said second pressure means (C2) a first selected internal pressure over a portion of said internal surface located at a second portion of the packer (P), and/or to attach at least one plug member (B1, B2) to the sample (ET) at a distance from one end of said packer (P), to define a zone of action (ZA), then to exert a second selected internal pressure on said sample at the zone of action (ZA) using said third pressure means (C3).

31. A method according to claim 30, **characterized in that** at least one strain gauge (Jk) is provided at at least one selected region of an external surface of said sample (ET), so as to obtain first stress measurements representative of the stress state undergone by said sample at said selected region.

32. A method according to claim 30 or claim 31, **characterized in that** at least two strain gauges (Jk) are provided at at least two selected regions of the external surface of said sample (ET), so as to obtain first stress measurements representative of the stress state undergone by said sample at each of said two selected regions.

33. A method according to one of claims 30 to 32, **characterized in that** there is further provided two support means (S1, S2) on which said sample (ET) is installed, and a rotary motor (MT) coupled to an excitation means (B, AR'), equipped with a device with an eccentric mass (DME) coupled to one end of the sample (ET) and defining an unbalanced mass, and said eccentric mass (DME) is driven in rotation using said motor (MT) at an adjustable rate, so as to subject said sample (ET) to a selected vibratory excitation, which is a function of the unbalanced mass, to deform it cyclically by bending.

34. A method according to claim 33, **characterized in that** at least one of said support means (S1, S2) is placed at one vibration node of the sample (ET).

35. A method according to claim 31 and claim 32 in combination with claim 33, **characterized in that** during a preliminary reference step, the initial rotation rate of the motor (MT) is initially selected as a function of the amplitude of a stress which is to be undergone by said sample (ET).

36. A method according to claim 35, **characterized in that** after the preliminary reference step, said rotation rate of the motor (MT) is adapted so that the amplitude of the bending stress undergone by said sample (ET) and represented by first measurements remains substantially constant.

37. A method according to one of claims 33 to 36, **characterized in that** there is provided at selected regions of said external surface of the sample (ET) at least one pair of accelerometers (A11, A12) placed at 90° to each other intended to deliver second measurements representative of the displacement undergone by said sample (ET), and **in that** the rotation rate of the motor (MT) is adapted as a function of last second measurements delivered by each pair of accelerometers (A11, A12), such that the amplitude of the radial displacement by bending undergone by said sample (ET) at the selected region remains substantially constant.

38. A method according to claim 37, **characterized in that** there is provided at other selected regions of said external surface of the sample at least two other pairs of accelerometers (A11, A12, At'1, Ai'2), the accelerometers of each pair being placed at 90° to each other at other selected regions of said external surface of the sample (ET) and intended to deliver other second measurements representative of displacements undergone by said sample (ET) at the other selected regions, and **in that** combinations of last second measurements are produced so as to adapt the rotation rate of the motor (MT) as a function of said combinations, such that the amplitude of the bending displacement undergone by said sample (ET) at the selected regions remains substantially constant.

39. A method according to claim 37 or 38, **characterized in that** at least said last second measurements delivered by at least one pair of accelerometers (A1, A12, Ai'1, Ai'2) are compared with second reference measurements representative of an initial displacement amplitude corresponding to a desired bending displacement amplitude at the selected region, then said rotation rate of the motor (MT) is adapted as a function of the result of said comparison.

40. A method according to claim 39, **characterized in that** a relative difference between the displacement amplitude, represented by said last second measurements, and said desired bending displacement amplitude is determined, then said distance is compared with the limits of a "regulation" tolerance interval, so as to adapt the rotation rate of the motor when said difference is outside said regulation interval.

**41.** A method according to one of claims 33 to 40, **characterized in that** each rotation imposed by said motor (MT) is detected.

**42.** A method according to claim 41, **characterized in that** said rotation rate of the motor (MT) is adapted each time the number of signals received is equal to a selected number.

**43.** A method according to one of claims 30 to 42, **characterized in that** at least one temperature sensor (CT) is provided, installed at a selected region of said sample (ET) so as to obtain third measurements representative of the temperature of the sample at said selected region.

**44.** A method according to one of claims 30 to 43, **characterized in that** at least one pressure sensor (CP) is provided, installed at a selected region of said sample (ET) to obtain fourth measurements representative of the internal pressure of said sample at said selected region.

**45.** A method according to one of claims 33 to 44, **characterized in that** during the loading test, said motor (MT) is ordered to drive said device with an eccentric mass (DME) in rotation in accordance with a selected sequence of rotation rates so as to subject it to a selected sequence of vibratory excitations.

**46.** A method according to one of claims 30 to 45, **characterized in that** first stress results derived from at least some of said first measurements are compared with second radial displacement results derived from at least some of said second measurements to authorize the test to continue when the first results are compatible with the second results.

**47.** A method according to one of claims 30 to 46, **characterized in that** leak detection is carried out at the periphery of said sample (ET) at said test zone (ZT).

**48.** Use of a method and unit (I) according to one of the preceding claims to load samples (ET) selected from a group comprising i) a single tube, ii) a first tubular component defining a first tube and a second tubular component defining a second tube and connected to said first tube by welding, iii) a first tubular component defining a first tube provided with a male threading and a second tubular component defining a second tube provided with a female threading intended to cooperate with said male threading to constitute a threaded connection, iv) a first tubular component defining a first tube provided with a male threading, a second tubular component defining a second tube provided with a male threading, and a third tubular component defining a coupling provided with two female threadings intended to cooperate respectively with said male threadings to constitute a threaded connection, and v) a first tubular component defining a first tube, provided on its external surface with a male series of annular reliefs and grooves, and a second tubular component defining a second tube, provided on its internal surface with a female series of annular reliefs and grooves corresponding to said male series, intended to cooperate with said male series to constitute a connection between the two tubes.

**Patentansprüche**

**1.** Installation (I) zur mechanischen Beanspruchung einer rohrförmigen Probe (ET), **dadurch gekennzeichnet, dass** sie mindestens einen Packer (P) aufweist, der in der Probe (ET) auf der Höhe eines zu testenden Bereichs (ZT) angeordnet ist, der in Längsrichtung eine Verlängerung aufweist, die länger ist als der zu testende Bereich (ZT) und aufweist: i) erste Druckmittel (C1) zum örtlichen Variieren des Durchmessers mindestens eines ersten Teils des Packers indem er gegen eine Innenwand der Probe (ET) auf der Höhe der zu testenden Zone (ZT) angelegt wird, ii) zweite Druckmittel (C2) zum Ausüben eines ersten ausgewählten Innendrucks auf einen Teil der Innenwand, der auf der Höhe eines zweiten Bereichs des Packers (P) gelegen ist, und/oder iii) dritte Druckmittel (C3), die mit mindestens einem Verschlusselement (B1, B2) zusammenwirken, welches mit der Probe von einem Ende des Packers (P) beabstandet fest verbunden ist, um einen Aktionsbereich (ZA) zu definieren, in dem auf die Probe (ET) auf der Höhe dieses Aktionsbereichs (ZA) ein zweiter gewählter Innendruck ausgeübt wird.

**2.** Installation nach Anspruch 1, **dadurch gekennzeichnet, dass** sie mindestens einen Dehnungsmessstreifen (JK) aufweist, der dazu bestimmt ist an einem gewählten Ort auf einer äußeren Oberfläche der Probe (ET) so angebracht zu werden, dass er erste Spannungsmesswerte liefert, die repräsentativ sind für den Zustand der durch die Probe auf der Höhe des gewählten Ortes erfahrenen Spannung.

3.   Installation nach einem der Ansprüche 1 und 2, **dadurch gekennzeichnet, dass** sie mindestens zwei Dehnungsmessstreifen (JK) aufweist, die dazu bestimmt sind an zwei verschiedenen ausgewählten Orten auf der äußeren Oberfläche der Probe (ET) so angebracht zu werden, dass sie erste Spannungsmesswerte liefern, die repräsentativ sind für den Spannungszustand, der von der Probe auf der Höhe eines jeden der ausgewählten Orte erfahren wurde.

4.   Installation nach einem der Ansprüche 1 bis 3, **dadurch gekennzeichnet, dass** sie außerdem aufweist: i) zwei Träger (S1, S2) die die Probe (ET) tragen, ii) einen Drehmotor (NT), der an ein Erregungsmittel (BO, AR') gekoppelt ist, das mit einer Vorrichtung mit einer exzentrischen Masse (DME) ausgerüstet ist, welche an ein Ende der Probe (ET) gekoppelt ist und eine Unwucht bildet, und iii) Steuermittel (NC), die den Drehantrieb der exzentrischen Masse derart mit einer einstellbaren Geschwindigkeit steuern, dass die Kurbel (ET) einer gewählten vibratorischen Erregung unterworfen wird, die von der Unwucht abhängt, um die Probe zyklisch durch Verbiegungen zu verformen.

5.   Installation nach Anspruch 4, **dadurch gekennzeichnet, dass** mindestens einer der Träger (S1, S2) so angeordnet ist, dass seine Position einem Schwingungsknoten der Probe entspricht.

6.   Installation nach einem der Ansprüche 2 und 3 in Kombination mit den Ansprüchen 4 und 5, **dadurch gekennzeichnet, dass** die Steuermittel (MC) so ausgebildet sind, dass sie die Drehgeschwindigkeit des Motors (MT) in Abhängigkeit von der Amplitude einer Beanspruchung, die man der Probe (ET) auferlegen möchte, anzupassen.

7.   Installation nach einem der Ansprüche 4 bis 6, **dadurch gekennzeichnet, dass** sie mindestens ein Paar Beschleunigungsmesser (A11, A12) aufweist, die dazu bestimmt sind in einem Winkel von 90° zueinander an gewählten Orten der äußeren Oberfläche der Probe (ET) angeordnet zu werden, um zweite Messwerte zu liefern, die repräsentativ sind für eine Bewegung, die die Probe erfahren hat, und **dadurch,** dass die Steuermittel (MC) ausgebildet sind, um die Drehgeschwindigkeit des Motors (MT) in Abhängigkeit von diesen letzteren zwei von dem Paar von Beschleunigungsmessern (A11, A12) gelieferten Messwerte derart anzupassen, dass die Amplitude der radialen Bewegung, die die Probe (ET) durch Verbiegung erfahren hat an einem gewählten Ort im Wesentlichen konstant bleibt.

8.   Installation nach Anspruch 7, **dadurch gekennzeichnet, dass** sie mindestens zwei Paare von Beschleunigungsmessern (A11, A12, Ai'1, Ai'2) aufweist, wobei die Beschleunigungsmesser eines jeden Paares dazu bestimmt sind in einem Winkel von 90° zueinander an ausgewählten Orten der äußeren Oberfläche der Probe (ET) derart angeordnet zu werden, dass sie weitere zweite Messwerte liefern, die auf der Höhe der anderen gewählten Orte genommen wurden und die repräsentativ sind für Bewegungen, die die Probe an den anderen gewählten Orten erfahren hat und **dadurch,** dass die Steuermittel (MC) ausgebildet sind, um Kombinationen der letzteren zweiten Messwerte derart zu bilden, dass die Drehgeschwindigkeit des Motors (MT) in Abhängigkeit von diesen Kombinationen derart angepasst wird, dass die Amplitude der Bewegungen, ausgelöst durch die Verbiegung, die die Probe an den gewählten Orten erfahren hat im Wesentlichen gleich bleibt.

9.   Installation nach Anspruch 8, **dadurch gekennzeichnet, dass** die rohrförmige Probe (ET) aus mindestens zwei rohrförmigen Bestandteilen (T1, T2) besteht, die miteinander auf der Höhe des zu testenden Bereichs (ZT) verbunden sind, wobei die beiden Paare von Beschleunigungsmessern (A11, A12, Ai'1, Ai'2) zu beiden Seiten der Verbindung angeordnet sind.

10.  Installation nach einem der Ansprüche 7 bis 9, **dadurch gekennzeichnet, dass** die Steuermittel (MC) ausgebildet sind zum Vergleichen mindestens der letzteren zweiten Messwerte, die mindestens von einem der Paare von Beschleunigungsmessern (Ai1, Ai2, Ai'1, Ai'2) gelieferten Messwerten mit zweiten Differenzmesswerten, die repräsentativ sind für eine ursprüngliche Bewegungsamplitude, die einer durch Verbiegung ausgelösten, am gewählten Ort gewünschten Bewegungsamplitude entspricht, und um die Drehgeschwindigkeit des Motors (MT) in Abhängigkeit von dem Ergebnis dieses Vergleiches anzupassen.

11.  Installation nach Anspruch 10, **dadurch gekennzeichnet, dass** die Steuermittel (MC) ausgebildet sind, um einen relativen Unterschied zwischen der Bewegungsamplitude, repräsentiert durch die letzteren zweiten Messwerte und der durch Verbiegung hervorgerufenen gewünschten Bewegungsamplitude zu bestimmen, und um diesen Unterschied mit einem Regelintervall genanntem Tolleranzintervall zu vergleichen, um die Drehgeschwindigkeit des Motors (MT) anzupassen, wenn dieser Unterschied außerhalb des Regelintervalls liegt.

12.  Installation nach einem der Ansprüche 4 bis 11, **dadurch gekennzeichnet, dass** sie eine Drehgebervorrichtung (DR) aufweist zum Erfassen jeder durch den Motor (MT) hervorgerufenen Drehung.

13. Installation nach Anspruch 12, **dadurch gekennzeichnet, dass** der Drehgeber (DR) ausgebildet ist, um den Steuermitteln (MC) einen für jede erfasste Rotation repräsentatives Signal zu geben, derart, dass die Drehgeschwindigkeit des Motors (MT) jedes Mal angepasst wird, wenn die Anzahl der empfangenen Signale gleich einer vorbestimmten Zahl ist.

14. Installation nach einem der Ansprüche 1 bis 13, **dadurch gekennzeichnet, dass** der Packer (P) einen im Wesentlichen nicht verformbaren Träger (TU) aufweist, auf dem eine verformbare ringförmige Membran (M) montiert ist, und **dadurch**, dass die ersten Druckmittel einen ersten Fluidspeisekreis (C1) aufweisen zum Einführen eines gewählten Fluids zwischen dem im Wesentlichen nicht verformbaren Träger (TU) und der Membran (M), um einen gewählten Druck herzustellen.

15. Installation nach Anspruch 14, **dadurch gekennzeichnet, dass** das Fluid eine Druckflüssigkeit ist.

16. Installation nach einem der Ansprüche 1 bis 15, **dadurch gekennzeichnet, dass** die zweiten Druckmittel einen zweiten Fluidspeisekreis (C2) aufweisen, mit einem Fluidausgang, der gegenüber der Innenwand der Probe (ET) mündet, um so den ersten gewählten Innendruck herzustellen.

17. Installation nach Anspruch 16, **dadurch gekennzeichnet, dass** der zweite Fluidspeisekreis (C2) die Membran (M) abgedichtet durchquert.

18. Installation nach einem der Ansprüche 16 und 17, **dadurch gekennzeichnet, dass** sie Leckerfassungsmittel (MDF) aufweist, die in der Nähe der äußeren Oberfläche der Probe (ET) in dem zu testenden Bereich (ZT) angeordnet sind und ausgebildet sind, um auf der Oberfläche der Probe (ET) ein eventuelles Fluidleck des zweiten Speisekreises (C2) zu erfassen.

19. Installation nach einem der Ansprüche 16 bis 18, **dadurch gekennzeichnet, dass** das in den zweiten Druckmitteln zirkulierende Fluid ein Gas ist.

20. Installation nach einem der Ansprüche 1 bis 19, **dadurch gekennzeichnet, dass** die dritten Druckmittel einen dritten Fluidspeisekreis (C3) aufweisen, zum Einspeisen von Fluid in jeden Aktionsbereich, um auf die Probe (ET) den zweiten gewählten Innendruck auszuüben.

21. Installation nach Anspruch 20, **dadurch gekennzeichnet, dass** das Fluid der dritten Druckmittel eine Druckflüssigkeit ist.

22. Installation nach einem der Ansprüche 20 und 21, **dadurch gekennzeichnet, dass** sie eine Verzweigungsvorrichtung (DA) aufweist, die an den ersten (C1) und dritten (C3) Fluidspeisekreis angeschlossen ist sowie eine Pumpe (PE), die an die Verzweigungsvorrichtung (DA) gekoppelt ist.

23. Installation nach Anspruch 14 in Kombination mit einem der Ansprüche 20 bis 22, **dadurch gekennzeichnet, dass** der Träger (TU) des Packers (P) ein Rohr ist, welches eine zentrale hohle Leitung bildet, die einen Teil des dritten Fluidspeisekreises (C3) bildet und zwei gegenüberliegende Enden aufweist, von denen mindestens eins in einem Aktionsbereich (ZA) mündet, um diesen mit Fluid zu speisen.

24. Installation nach einem der Ansprüche 1 bis 23, **dadurch gekennzeichnet, dass** sie zwei Schließorgane (B1, B2) aufweist, die von den beiden Enden des Packers (P) beabstandet installiert sind um mindestens einen Aktionsbereich (ZA) zu definieren, um auf die Probe den zweiten gewählten Innendruck auf der Höhe des Aktionsbereichs (ZA) auszuüben.

25. Installation nach der Kombination der Ansprüche 23 und 24, **dadurch gekennzeichnet, dass** ein Teil des ersten Fluidspeisekreises (C1) und/oder ein Teil des zweiten Fluidspeisekreises (C2) im Inneren der zentralen Leitung angeordnet ist.

26. Installation nach einem der Ansprüche 1 bis 25, **dadurch gekennzeichnet, dass** sie mindestens einen Temperaturfühler (CT) aufweist, der dazu bestimmt ist an einem gewählten Ort der Probe (ET) der Art installiert zu werden, dass er dritte Messwerte liefert, die repräsentativ sind für die Temperatur der Probe an dem gewählten Ort.

27. Installation nach einem der Ansprüche 1 bis 26, **dadurch gekennzeichnet, dass** sie mindestens einen Drucksensor (CP) aufweist, der dazu bestimmt ist an einem gewählten Ort der Probe (ET) derart angeordnet zu werden, dass er vierte Messwerte liefert, die repräsentativ sind für den Innendruck der Probe an dem gewählten Ort.

28. Installation nach einem der Ansprüche 1 bis 27, **dadurch gekennzeichnet, dass** die Steuermittel ausgebildet sind, um von bestimmten von mindestens den ersten Messwerten ausgegebenen Resultaten mit von bestimmten von mindestens den zweiten Messwerten ausgegebenen Resultaten zu vergleichen, um das Fortführen des Tests zu autorisieren, wenn die ersten Resultate mit den zweiten Resultaten kompatibel sind.

29. Installation nach einem der Ansprüche 4 bis 27, **dadurch gekennzeichnet, dass** die Steuermittel (MC) ausgebildet sind, um den Motor (MT) während eines Belastungstests zu befehlen die exzentrische Masse (DME) zu einer Drehbewegung anzutreiben gemäß einer ausgewählten Sequenz von Drehgeschwindigkeiten, um die Probe (MT) einer gewählten Sequenz von Vibrationsanregungen auszusetzen.

30. Verfahren zur mechanischen Belastung einer rohrförmigen Probe (ET), **dadurch gekennzeichnet, dass** es darin besteht in die Probe (ET) auf der Höhe eines zu testenden Bereichs (ZT) mindestens einen Packer (P) einzuführen, der eine Längserstreckung aufweist, die größer ist als die Längserstreckung des zu testenden Bereichs (ZD) und der erste (C1) und zweite (C2) und/oder dritte (C3) Druckmittel aufweist, das ferner darin besteht lokal den Durchmesser mindestens eines ersten Teils des Packers (P) mit den ersten Druckmitteln (C1) variieren zu lassen, um den Packer (P) gegen eine Innenwand der Probe (ET) auf der Höhe des zu testenden Bereichs (ZT) anzudrücken und mit den zweiten Druckmitteln (C2) einen ersten gewählten Innendruck auf einen Teil der auf der Höhe eines zweiten Teils des Packers (P) gelegenen Innenwand auszuüben und/oder an der Probe (ET) mindestens ein Schließorgan (B1, B2) von einem Ende des Packers (P) beabstandet zu befestigen, um einen Aktionsbereich (ZA) zu definieren und auf die Probe (ET) mit den dritten Druckmitteln (C3) einen zweiten gewählten Innendruck auf der Höhe des Aktionsbereichs (ZA) auszuüben.

31. Verfahren nach Anspruch 30, **dadurch gekennzeichnet dass** man im mindestens einem gewählten Bereich einer äußeren Oberfläche der Probe (ET) mindestens einen Dehnungsmessstreifen (Jk) vorsieht, um erste Spannungsmesswerte zu erhalten, die repräsentativ sind für die von der Probe auf der Höhe des gewählten Bereichs erfahrene Spannung.

32. Verfahren nach einem der Ansprüche 30 und 31, **dadurch gekennzeichnet, dass** in mindestens zwei gewählten Bereichen der äußeren Oberfläche der Probe (ET) mindestens zwei Dehnungsmessstreifen (Jk) vorsieht, um erste Spannungsmesswerte zu erhalten, die repräsentativ sind für den von der Probe auf der Höhe der gewählten Bereiche erfahrenen Spannungszustand.

33. Verfahren nach einem der Ansprüche 30 bis 32, **dadurch gekennzeichnet, dass** ferner zwei Träger (S1, 52) vorgesehen sind, auf dem die Probe (ET) und ein Drehmotor (MT) installiert sind, der an ein Erregungsmittel (B, AR') gekoppelt ist, das mit einer Vorrichtung mit exzentrischer Masse (DME) gekoppelt ist, die wiederum an einem Ende der Probe (ET) angekoppelt ist und eine Unwucht definiert, und wobei man die exzentrische Masse (DME) zu einer Drehbewegung mit dem Motor (MT) mit einer einstellbaren Drehgeschwindigkeit antreibt, sodass die Probe (ET) einer gewählten Erregungsvibration in Abhängigkeit von der Unwucht ausgesetzt wird, um sie zyklisch durch Verbiegung zu verformen.

34. Verfahren nach Anspruch 33, **dadurch gekennzeichnet, dass** mindestens einer der Träger (S1, S2) auf der Höhe eines Schwingungsknotens der Probe (ET) angeordnet wird.

35. Verfahren nach einem der Ansprüche 31 und 32 in Kombination mit Anspruch 33, **dadurch gekennzeichnet, dass** während eines vorläufigen Referenzschrittes zuerst die Anfangsdrehgeschwindigkeit des Motors (MT) in Abhängigkeit von der Amplitude einer Beanspruchung, mit der man die Probe (ET) beaufschlagen will, gewählt wird.

36. Verfahren nach Anspruch 35, **dadurch gekennzeichnet, dass** nach dem vorläufigen Referenzschritt die Drehgeschwindigkeit des Motors (MT) derart angepasst wird, dass die Amplitude der von der Probe (ET) erfahrenen Biegebeanspruchung, die durch die ersten Messungen repräsentiert wird, im Wesentlichen konstant bleibt.

37. Verfahren nach einem der Ansprüche 33 bis 36, **dadurch gekennzeichnet, dass** man in gewählten Bereichen der äußeren Oberfläche der Probe (ET) mindestens ein Paar Beschleunigungsmesser (A11, A12), die gegeneinander um 90° versetzt angeordnet sind, vorsieht, die dazu bestimmt sind zweite Messergebnisse zu liefern, die repräsentativ sind für eine von der Probe (ET) erfahrene Bewegung, und **dadurch**, dass die Drehgeschwindigkeit des Motors (MT) in Abhängigkeit von diesen zweiten von jedem Beschleunigungsmesserpaar (A11, A12) gelieferten Messwerte anpasst derart, dass die radiale Bewegungsamplitude, ausgelöst durch die von der Probe (ET) erfahrene Verbiegung, in einem ausgewählten Bereich im Wesentlichen konstant bleibt.

38. Verfahren nach Anspruch 37, **dadurch gekennzeichnet, dass** man in anderen gewählten Bereichen der äußeren Oberfläche der Probe mindestens zwei weitere Beschleunigungsmesserpaare (A11, A12, Ai'1, Ai'2) vorsieht, wobei die Beschleunigungsmesser eines jeden Paares um 90° zueinander versetzt in anderen gewählten Bereichen der äußeren Oberfläche der Probe (ET) platziert sind und dazu bestimmt sind weitere zweite Messwerte zu liefern, die repräsentativ sind für die von der Probe (ET) auf der Höhe der anderen gewählten Bereiche erfahrenen Bewegungen und **dadurch**, dass Kombinationen der letzteren zweiten Messwerte ausgeführt werden, um die Drehgeschwindigkeit des Motors (MT) in Abhängigkeit von diesen Kombinationen anzupassen, um die Bewegungsamplitude, ausgelöst durch die Verbiegung, die die Probe (ET) erfahren hat in den ausgewählten Bereichen im Wesentlichen konstant zu halten.

39. Verfahren nach einem der Ansprüche 37 und 38, **dadurch gekennzeichnet, dass** man mindestens die letzteren zweiten von mindestens einem Beschleunigungsmesserpaar (A11, A12, Ai'1, Ai'2) gelieferten zweiten Messwerte mit den zweiten Referenzmesswerten vergleicht, die repräsentativ sind für eine Anfangsbewegungsamplitude, die einer durch Verbiegung am gewählten Ort hervorgerufenen gewünschten Bewegungsamplitude entspricht und man die Drehgeschwindigkeit des Motors (MT) in Abhängigkeit von dem Ergebnis des Vergleichs anpasst.

40. Verfahren nach Anspruch 39, **dadurch gekennzeichnet, dass** man einen relativen Abstand zwischen der Bewegungsamplitude, repräsentiert durch die letzteren zweiten Messwerte und der durch Verbiegung hervorgerufenen gewünschten Bewegungsamplitude bestimmt und man diesen Abstand mit einem Regulierintervall genannten Tolleranzintervall vergleicht, um die Drehgeschwindigkeit des Motors anzupassen, wenn dieser Abstand außerhalb des Regulierintervalls liegt.

41. Verfahren nach einem der Ansprüche 33 bis 40, **dadurch gekennzeichnet, dass** jede durch den Motor (MT) hervorgerufene Drehung erfasst wird.

42. Verfahren nach Anspruch 41, **dadurch gekennzeichnet, dass** man die Drehgeschwindigkeit des Motors (MT) jedes Mal anpasst, wenn die Anzahl der empfangenen Signale gleich einer gewählten Zahl ist.

43. Verfahren nach einem der Ansprüche 30 bis 42, **dadurch gekennzeichnet, dass** mindestens ein Temperaturfühler (CT) vorgesehen ist, der in einem gewählten Bereich der Probe (ET) installiert ist, um dritte Messwerte zu erhalten, die repräsentativ sind für die Temperatur der Probe in dem gewählten Bereich.

44. Verfahren nach einem der Ansprüche 30 bis 43, **dadurch gekennzeichnet, dass** mindestens ein Druckmesser (CP) vorgesehen ist, der in einem gewählten Bereich der Probe (ET) installiert ist, um vierte Messwerte zu erhalten, die repräsentativ sind für den Innendruck der Probe in dem gewählten Bereich.

45. Verfahren nach einem der Ansprüche 33 bis 44, **dadurch gekennzeichnet, dass** während eines Belastungstests dem Motor (MT) der Befehl gegeben wird, die Vorrichtung mit exzentrischer Masse (DME) gemäß einer gewählten Drehgeschwindigkeitssequenz zu einer Drehbewegung anzutreiben, um die Vorrichtung einer gewählten Vibrationserregungssequenz auszusetzen.

46. Verfahren nach einem der Ansprüche 30 bis 45, **dadurch gekennzeichnet, dass** man die ersten von bestimmten wenigstens der ersten Messwerte ausgegebenen Spannungsresultate mit den zweiten ausgegebenen Resultaten aus gegebenen Resultaten der Radialbewegung von bestimmten wenigstens der zweiten Messwerte vergleicht, um die Fortsetzung des Tests zu autorisieren wenn die ersten Resultate kompatibel mit den zweiten Resultaten sind.

47. Verfahren nach einem der Ansprüche 30 bis 46, **dadurch gekennzeichnet, dass** eine Leckerfassung auf der Oberfläche der Probe (ET) auf der Höhe des zu testenden Bereichs (ZT) erfolgt.

48. Anwendung des Verfahrens und der Installation (I) nach einem der vorstehenden Ansprüche für die Belastungen von Proben (ET), ausgewählt aus einer Gruppe, die enthält: i) ein einzelnes Rohr, ii) ein erster rohrförmiger Bestandteil, der ein erstes Rohr definiert und ein zweiter rohrförmiger Bestandteil, der ein zweites Rohr definiert und durch Verschweißung mit dem ersten Rohr verbunden ist, iii) ein erster rohrförmiger Bestandteil, der ein erstes Rohr definiert, welches mit einem Außengewinde versehen ist und ein zweiter rohrförmiger Bestandteil, der ein zweites Rohr definiert, welches mit einem Innengewinde versehen ist, welches dazu bestimmt ist mit dem Außengewinde zusammenzuwirken, um eine Schraubverbindung herzustellen, iv) ein erster rohrförmiger Bestandteil, der ein erstes Rohr definiert, welches mit einem Außengewinde versehen ist und ein zweiter rohrförmiger Bestandteil, der ein zweites Rohr definiert, welches mit einem Außengewinde versehen ist und ein dritter rohrförmiger Bestandteil, der eine Verbindungsmuffe definiert, welche mit zwei Innengewinden versehen ist, die dazu bestimmt sind jeweils mit den Außengewinden zusammenzuwirken, um eine Schraubverbindung herzustellen, und v) ein erster rohrförmiger Bestandteil, der ein erstes Rohr definiert, welches auf seiner äußeren Oberfläche mit einer Serie von Rippen und Ringnuten versehen ist und ein zweiter rohrförmiger Bestandteil, der ein zweites Rohr definiert, welches auf seiner Innenwand mit einer Serie von Rippen und Ringnuten versehen ist, die der vorstehenden Serie entspricht, und die dazu bestimmt ist mit der vorstehenden Serie zusammenzuwirken, um eine Verbindung zwischen den beiden Rohren herzustellen.

FIG.1

FIG.2

FIG.3

JK

FIG.4

RB          BO

LH

MT    AR    AR'    DME    ET

FIG.6

J#10                    J#7

J#9              J#8        J#6

Axe 0°    T1                      J#11    J#10    J#5    J#7    J#2    J#1    T2
          J#3    J#4                                                    
                              J#9                    J#6              
Axe 180°  B1                                                        B2
                              J#11              J#8

FIG.5

EP 1 853 893 B1

FIG.7

FIG.8

**RÉFÉRENCES CITÉES DANS LA DESCRIPTION**

**Documents brevets cités dans la description**

- FR 2618901
- EP 1418376 A
- US 6288373 B
- WO 9908828 A
- US 5681059 A